# EUROPEAN PATENT APPLICATION

(11) **EP 4 567 597 A1**
(43) Date of publication of application: **11.06.2025**
(21) Application number: 23856418.1
(22) Date of filing: 01.08.2023
(51) Int. Cl.: G06F 9/50

(54) **RESOURCE ALLOCATION METHOD, APPARATUS, AND CARRIER**

(30) Priority: 22.08.2022 CN 202211005116
(71) Applicant: Shenzhen Yinwang Intelligent Technologies Co., Ltd., Shenzhen, Guangdong 518129 (CN)
(72) Inventor: LI, Ping, Shenzhen, Guangdong 518129 (CN)
(74) Representative: Maiwald GmbH
(86) International application number: PCT/CN2023/110520
(87) International publication number: WO 2024/041328

(57) **Abstract**

Embodiments of this application provide a resource allocation method, an apparatus, and a means of delivery. The method may be applied to a cockpit of the means of delivery. The means of delivery may include a plurality of display areas. The method may include: allocating a first resource to a first display area, where the plurality of display areas include the first display area; and adjusting, based on a running status of an application in the first display area, the first resource allocated to the first display area. A resource scheduling method provided in embodiments of this application may be applied to a new energy vehicle or an intelligent vehicle, to improve resource utilization, and help improve user experience.

## Description

This application claims priority to Chinese Patent Application No. 202211005116.5, filed with the China National Intellectual Property Administration on August 22, 2022 and entitled "RESOURCE ALLOCATION METHOD, APPARATUS, AND MEANS OF DELIVERY", which is incorporated herein by reference in its entirety.

### TECHNICAL FIELD

Embodiments of this application relate to the field of intelligent cockpits, and more specifically, to a resource allocation method, an apparatus, and a means of delivery.

### BACKGROUND

As vehicle intelligence and networking improve, a vehicle cockpit gradually develops to an intelligent cockpit with human-computer interaction as the core and multi-screen linkage. The intelligent cockpit can provide more diversified audio-visual entertainment functions, but cases such as frame freezing still occur on a display, resulting in poor user experience. Therefore, during use of a vehicle-mounted display, how to meet use experience of a user becomes an urgent problem to be resolved.

### SUMMARY

Embodiments of this application provide a resource allocation method, an apparatus, and a means of delivery, to help improve resource utilization and improve user experience.

The means of delivery in this application may include a road means of transportation, a water means of transportation, an air means of transportation, an industrial device, an agricultural device, an entertainment device, or the like. For example, the means of delivery may be a vehicle, and the vehicle is a vehicle in a broad concept, and may be a means of transportation (for example, a commercial vehicle, a passenger vehicle, a motorcycle, an airborne vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), an entertainment device, a toy vehicle, or the like. A type of the vehicle is not specifically limited in embodiments of this application. For another example, the means of delivery may be a means of transportation like an aircraft or a ship.

According to a first aspect, a resource allocation method is provided, and may be applied to a cockpit of a means of delivery. The means of delivery includes a plurality of display areas, and the method may be performed by the means of delivery, or may be performed by a vehicle-mounted terminal like an in-vehicle infotainment of the means of delivery, or may be performed by a chip or a circuit of a vehicle-mounted terminal. This is not limited in this application. For ease of description, the following uses an example in which the method is performed by the means of delivery for description.

The method may include: allocating a first resource to a first display area, where the plurality of display areas include the first display area; and adjusting, based on a running status of an application in the first display area, the first resource allocated to the first display area.

In embodiments of this application, the first resource allocated to the first display area is dynamically adjusted based on the running status of the application in the first display area. This helps ensure smooth running of the application in the first display area, avoids a case in which frame freezing occurs in the first display area, and helps improve resource utilization, and improve user experience.

With reference to the first aspect, in some implementations of the first aspect, the plurality of display areas further include a second display area, and the method further includes: allocating a second resource to the second display area; and the adjusting the first resource allocated to the first display area includes: allocating a part of resources in the second resource to the first display area when resources required for running the application in the first display area are greater than or equal to available resources in the first resource.

For example, the first display area may refer to a display in a specific area in the cockpit, for example, a central display screen or a front passenger screen, or may refer to a specific area of a specific display. For example, when the central display screen and the front passenger screen are combined into one long screen and respectively correspond to a central control display area and a front passenger display area of the long screen, the first display area may be the central control display area or the front passenger display area. The second display area may be any display area that is different from the first display area in the plurality of display areas.

For example, the available resources in the first resource may be idle resources in the first resource, or may be a part of resources in the idle resources. For example, it is assumed that a resource proportion of the first resource is 40%, a resource proportion of used resources in the first resource is 15%, and a resource proportion of idle resources in the first resource is 25%. For example, a resource proportion of available resources in the first resource may be 25%. For another example, when resource usage of the first resource is high, a case like frame freezing may occur in the first display area corresponding to the first resource, and resources of a preset threshold (for example, resources of a proportion 3% or another value) may be retained in the first resource to avoid frame freezing. In this case, a resource proportion of the available resources in the first resource is 22% (22% = 40% - 15% - 3%). For another example, to avoid frame freezing, resources of a preset proportion may be retained. For example, 5% of the first resource (namely, resources of a resource proportion 2% = 40%*5%) is retained. In this case, a resource proportion of the available resources is 23% (23% = 40% - 15% - 2%). For another example, 12% of idle resources (namely, resources of a resource proportion 3% = 25%* 12%) are retained. In other words, the available resources are 88% of the idle resources. In this case, a resource proportion of the available resources is 22%. The preset proportion may alternatively be another value, for example, 6% or 10%.

For example, when a vehicle is powered on, resources may be allocated to a plurality of display areas. In a process in which a user uses the vehicle, the user may interact with a cockpit. When the vehicle detects an input of the user, a new task may be added to a display area in response to the input of the user. In this case, resources required for running an application in the display area may change. Therefore, resource allocation may need to be performed on the plurality of display areas. In a process of interaction between the user and the cockpit, the input of the user may be obtained by detecting a gesture instruction, detecting a voice instruction, or detecting an input of the user for the display area (for example, a tap or drag operation performed by the user on a display), or may be obtained in a manner of eye tracking.

In embodiments of this application, when the resources required for running the application in the first display area are greater than or equal to the available resources in the first resource, resource scheduling is performed, so that resource allocation frequency can be reduced, and this helps reduce resource allocation overheads.

With reference to the first aspect, in some implementations of the first aspect, the adjusting the first resource allocated to the first display area may include: allocating a part of resources in the second resource to the first display area when the first display area includes a first application and the first application is running.

For example, the first application may be a preset application, for example, a settings application or a navigation application; or may be an application whose resource requirement during running is greater than or equal to a preset threshold, for example, an application whose resource requirement during running is greater than or equal to a resource proportion 8%. Alternatively, the preset threshold may be another value (for example, 10%). The first application may alternatively be one or more types of applications, such as a game application, a video application, or a social application. The first application may be set in a plurality of methods. For example, the first application may be set before delivery, or may be set by the user, or a list of the first application may be generated according to a preset rule and based on a historical running status of the means of delivery.

In embodiments of this application, when it is determined that the first display area includes the first application and the first application is running, resource scheduling is performed, to ensure smooth running of the first application, reduce resource allocation frequency, and help reduce resource allocation overheads.

With reference to the first aspect, in some implementations of the first aspect, the allocating a part of resources in the second resource to the first display area may include: allocating the part of resources in the second resource to the first display area when available resources in the second resource are greater than or equal to a preset threshold and/or when the second display area includes a second application and the second application is not running.

For example, similar to the first application, the second application may also include a preset application, an application whose resource requirement during running is greater than or equal to a preset threshold, one or more types of applications, or the like.

In embodiments of this application, the available resources in the second resource and a running status of the second application in the second display area are determined, so that when the part of resources in the second resource are allocated to the first resource, smooth running of the first display area is ensured, resource utilization is improved, and impact of the resource allocation process on the second display area is reduced.

With reference to the first aspect, in some implementations of the first aspect, the second display area includes an instrument display area, and the allocating a second resource to the second display area includes: allocating the second resource to a plurality of tasks in the instrument display area; and the allocating a part of resources in the second resource to the first display area may include: allocating resources of a part of tasks in the plurality of tasks to the instrument display area, and allocating resources of another part of tasks in the plurality of tasks to the first display area.

In embodiments of this application, when resources in the instrument display area need to be allocated to the first display area, resources allocated to a part of tasks in the instrument display area may be reserved, and resources of another part of tasks are allocated to the first display area. This helps maintain basic functions of the instrument display area, and helps ensure safety of the user and the means of delivery.

With reference to the first aspect, in some implementations of the first aspect, the method may further include: determining, based on priorities of the plurality of tasks, that priorities of the part of tasks are higher than priorities of the another part of tasks.

In embodiments of this application, a task that needs to be maintained in the instrument display area is determined based on the priorities of the plurality of tasks. This helps reduce impact of resource scheduling on safety of the means of delivery and the user, and helps ensure user security.

With reference to the first aspect, in some implementations of the first aspect, before the allocating a part of resources in the second resource to the first display area, the method further include: determining that the means of delivery is in a parked state.

In embodiments of this application, before a part of resources in the instrument display area are scheduled to the first display area, it is determined whether the means of delivery is in the parked state. This helps improve resource utilization and ensure safety of the means of delivery and the user.

With reference to the first aspect, in some implementations of the first aspect, the first resource and the second resource may be from a same virtual machine.

For example, the plurality of display areas are controlled by a plurality of virtual machines, the plurality of virtual machines include a first virtual machine and a second virtual machine, the first virtual machine controls at least two display areas, the at least two display areas include the first display area, and the allocating a part of resources in the second resource to the first display area includes: preferentially allocating a part of resources of another display area in the first virtual machine to the first display area.

For example, when the plurality of display areas are controlled by a plurality of virtual machines, an example in which an instrument display screen is controlled by a virtual machine 1, and the central display screen and the front passenger screen are controlled by a virtual machine 2 is used. When resources required by an application on the central display screen are greater than or equal to available resources in resources allocated to the central display screen, more resources may be allocated to the central display screen. For example, a resource proportion of available resources in resources allocated to the central display screen is 15%, a resource proportion of available resources in resources allocated to the front passenger screen is 10%, and a resource proportion of available resources in resources allocated to the instrument display screen is 8%. In other words, available resources in the virtual machine 2 may be 25%. If a new task related to the application on the central display screen needs 20% of the resources during running, and the resources are less than the available resources in the virtual machine 2, the available resources corresponding to the front passenger screen may be allocated to the central display screen, and resources currently allocated to the instrument display screen remains unchanged. For example, after resource scheduling, resource proportions of available resources corresponding to the central display screen, the front passenger screen, and the instrument display screen are 0%, 5%, and 8% respectively. Kernel scheduling may be involved when resources are scheduled between virtual machines. In this manner, resource scheduling between virtual machines can be avoided, and resource allocation overheads can be reduced. For another example, if a new task related to the application on the central display screen needs 27% of the resources during running, all the available resources corresponding to the front passenger screen may be scheduled to the central display screen, and the available resources corresponding to the instrument display screen are used to supplement a remaining gap. For example, after resource scheduling, resource proportions of available resources corresponding to the central display screen, the front passenger screen, and the instrument display screen are 0%, 0%, and 6% respectively. In other words, all the available resources in the virtual machine 2 and a part of available resources in the virtual machine 1 may be allocated to the central display screen. In this way, resources scheduled between virtual machines are minimized, and resource allocation overheads are reduced.

In embodiments of this application, resources of a same virtual machine are scheduled to the first display area, so that resource scheduling among a plurality of virtual machines can be avoided, and resource allocation overheads can be reduced.

With reference to the first aspect, in some implementations of the first aspect, the plurality of display areas are controlled by a plurality of virtual machines, the plurality of virtual machines include a first virtual machine and a second virtual machine, the first display apparatus is controlled by the first virtual machine, and the second display area is controlled by the second virtual machine; and the allocating a part of resources in the second resource to the first display area when resources required for running the application in the first display area are greater than or equal to available resources in the first resource includes: when the resources required for running the application in the first display area are greater than or equal to available resources in the first virtual machine, allocating the part of resources in the second resource to the first display area, where the second resource is from the second virtual machine.

In embodiments of this application, when available resources in the first virtual machine cannot meet the resources required for running the application in the first display area, resources in the second virtual machine are scheduled to the first display area. This helps reduce frequency of resource scheduling among the plurality of virtual machines, and can reduce resource allocation overheads.

With reference to the first aspect, in some implementations of the first aspect, the second resource is used to display a video playing interface at a first definition in the second display area; and the method may further include: when allocating the part of resources in the second resource to the first display area, displaying a video playing interface at a second definition in the second display area, where the second definition is lower than the first definition.

In embodiments of this application, a definition of a video playing interface displayed in the second display area is reduced, so that overheads required for playing a video in the second display area can be reduced. This helps ensure smooth playing of the video, and reduce impact on user experience in a corresponding cockpit area.

With reference to the first aspect, in some implementations of the first aspect, the second resource is used to display a multimedia file playing interface in the second display area; and the method may further include: when allocating the part of resources in the second resource to the first display area, displaying an interface of pausing playing of a multimedia file in the second display area.

In embodiments of this application, a multimedia playing interface in the second display area is paused. This helps reduce a resource requirement of the second display area, and helps implement appropriate resource allocation.

With reference to the first aspect, in some implementations of the first aspect, the second resource is used to display a plurality of interface elements in the second display area; and the method may further include: when allocating the part of resources in the second resource to the first display area, displaying a part of the plurality of interface elements in the second display area.

In embodiments of this application, the part of the plurality of interface elements is displayed in the second display area, so that use of the second display area by the user can be restricted, and resource preemption by the second display area can be avoided. This helps implement appropriate resource allocation when resources are limited, and ensures smooth running of the first display area.

With reference to the first aspect, in some implementations of the first aspect, the first application may include a game application, a social application, or a video application.

According to a second aspect, a control apparatus is provided, and may be configured to control a plurality of display areas in a cockpit of a means of delivery. The apparatus may include: a resource allocation unit, configured to allocate a first resource to a first display area, where the plurality of display areas include the first display area; and a resource adjustment unit, configured to adjust, based on a running status of an application in the first display area, the first resource allocated to the first display area.

With reference to the second aspect, in some implementations of the second aspect, the plurality of display areas may further include a second display area, and the resource allocation unit may be further configured to: allocate a resource to the second display area; and the resource adjustment unit may be configured to: allocate a part of resources in a second resource to the first display area when resources required for running the application in the first display area are greater than or equal to available resources in the first resource.

With reference to the second aspect, in some implementations of the second aspect, the resource adjustment unit may be configured to: allocate a part of resources in the second resource to the first display area when the first display area includes a first application and the first application is running.

With reference to the second aspect, in some implementations of the second aspect, the resource adjustment unit may be configured to: allocate the part of resources in the second resource to the first display area when available resources in the second resource are greater than or equal to a preset threshold and/or when the second display area includes a second application and the second application is not running.

With reference to the second aspect, in some implementations of the second aspect, the second display area may include an instrument display area, and the resource allocation unit may be configured to: allocate the second resource to a plurality of tasks in the instrument display area; and the resource adjustment unit may be configured to: allocate resources of a part of tasks in the plurality of tasks to the instrument display area, and allocate resources of another part of tasks in the plurality of tasks to the first display area.

With reference to the second aspect, in some implementations of the second aspect, the resource adjustment unit may be further configured to: determine, based on priorities of the plurality of tasks, that priorities of the part of tasks are higher than priorities of the another part of tasks.

With reference to the second aspect, in some implementations of the second aspect, before allocating the part of resources in the second resource to the first display area, the resource adjustment unit may be further configured to: determine that the means of delivery is in a parked state.

With reference to the second aspect, in some implementations of the second aspect, the first resource and the second resource may be from a same virtual machine.

With reference to the second aspect, in some implementations of the second aspect, the plurality of display areas are controlled by a plurality of virtual machines, the plurality of virtual machines include a first virtual machine and a second virtual machine, the first display area may be controlled by the first virtual machine, and the second display area may be controlled by the second virtual machine; and the resource adjustment unit may be configured to: when the resources required for running the application in the first display area are greater than or equal to available resources in the first virtual machine, allocate the part of resources in the second resource to the first display area, where the second resource is from the second virtual machine.

With reference to the second aspect, in some implementations of the second aspect, the second resource is used to display a multimedia file playing interface in the second display area; and the resource adjustment unit may be further configured to: when allocating the part of resources in the second resource to the first display area, display an interface of pausing playing of a multimedia file in the second display area.

With reference to the second aspect, in some implementations of the second aspect, the second resource is used to display a video playing interface at a first definition in the second display area; and the resource adjustment unit may be further configured to: when allocating the part of resources in the second resource to the first display area, display a video playing interface at a second definition in the second display area, where the second definition is lower than the first definition.

With reference to the second aspect, in some implementations of the second aspect, the second resource is used to display a plurality of interface elements in the second display area; and the resource adjustment unit may be further configured to: when allocating the part of resources in the second resource to the first display area, display a part of the plurality of interface elements in the second display area.

With reference to the second aspect, in some implementations of the second aspect, the first application may be a game application, a video application, or a social application.

According to a third aspect, a control apparatus is provided. The control apparatus may include: a memory, configured to store a program; and a processor, configured to execute the program stored in the memory. When the program stored in the memory is executed, the processor is configured to perform the method in any one of the first aspect and the possible implementations of the first aspect.

According to a fourth aspect, a control system is provided. The control system may include a computing platform and a display apparatus. The computing platform may include the apparatus in any possible implementation of the second aspect or the third aspect.

According to a fifth aspect, a means of delivery is provided. The means of delivery includes the apparatus in any possible implementation of the second aspect or the third aspect, or may include the control system in any one of the fourth aspect and possible implementations of the fourth aspect.

With reference to the fifth aspect, in some implementations of the fifth aspect, the means of delivery is a vehicle.

According to a sixth aspect, a computer program product is provided. The computer program product includes computer program code. When the computer program code is run on a computer, the computer is enabled to perform the method in any one of the first aspect and the possible implementations of the first aspect.

It should be noted that all or some of computer program code may be stored in a first storage medium. The first storage medium may be encapsulated together with a processor, or may be encapsulated separately from a processor. This is not specifically limited in embodiments of this application.

According to a seventh aspect, a computer-readable medium is provided. The computer-readable medium stores instructions, and when the instructions are executed by a processor, the processor is enabled to perform the method in any one of the first aspect and the possible implementations of the first aspect.

According to an eighth aspect, a chip is provided. The chip includes a processor, configured to invoke a computer program or computer instructions stored in a memory, so that the processor performs the method in any one of the first aspect and the possible implementations of the first aspect.

With reference to the eighth aspect, in a possible implementation, the processor is coupled to the memory through an interface.

With reference to the eighth aspect, in a possible implementation, the chip system further includes a memory. The memory stores a computer program or computer instructions.

Embodiments of this application provide a resource allocation method, an apparatus, and a means of delivery, to dynamically adjust, based on a running status of an application in a first display area, a first resource allocated to the first display area. This helps improve resource utilization, ensure smooth running of the application in the first display area, and improve user experience. When resources required for running the application in the first display area are greater than or equal to available resources in the first resource, and/or when the first display area includes a first application and the first application is running, a part of resources in a second resource is allocated to the first display area, so that resource scheduling frequency can be reduced, and resource allocation overheads can be reduced. Available resources in the second resource and a running status of a second application in a second display area are determined, so that resource utilization can be improved, smooth running of the first display area can be ensured, and impact of resource allocation on running of the second display area can be reduced. When resources allocated to an instrument display screen are scheduled to the first display area, resources allocated to a part of tasks in an instrument display area may be reserved, and resources of another part of tasks are allocated to the first display area. This helps maintain basic functions of the instrument display area, and helps ensure safety of a user and the means of delivery. Further, a task that needs to be maintained in the instrument display area may be determined based on priorities of a plurality of tasks, to reduce impact of resource scheduling on the safety of the means of delivery and the user. Whether the means of delivery is in a parked state is determined, and this helps improve resource utilization and ensure the safety of the means of delivery and the user. Resources of a same virtual machine are scheduled to the first display area, so that resource scheduling among a plurality of virtual machines can be avoided, and resource allocation overheads can be reduced. When available resources in a first virtual machine cannot meet the resources required for running the application in the first display area, resources in another virtual machine are scheduled to the first display area. This helps reduce frequency of the resource scheduling among the plurality of virtual machines, and can reduce resource allocation overheads. Definition of a video playing interface displayed in the second display area is reduced, so that overheads required for playing a video in the second display area can be reduced. This helps ensure smooth playing of the video, and reduces impact on user experience in a corresponding cockpit area. A multimedia playing interface in the second display area is paused. This helps reduce a resource requirement of the second display area, and helps implement appropriate resource allocation. A part of the plurality of interface elements is displayed in the second display area, so that use of the second display area by the user can be restricted, and resource preemption by the second display area can be avoided. This helps implement appropriate resource allocation when resources are limited, and ensures smooth running of the first display area.

### BRIEF DESCRIPTION OF DRAWINGS

FIG. 1 is a schematic functional block diagram of a vehicle according to an embodiment of this application;
FIG. 2 is a schematic diagram of a vehicle cockpit scenario according to an embodiment of this application;
FIG. 3 is a schematic diagram of a system according to an embodiment of this application;
FIG. 4 is a schematic diagram of a system architecture of a control apparatus according to an embodiment of this application;
FIG. 5 is a schematic diagram of a resource scheduling method according to an embodiment of this application;
FIG. 6A and FIG. 6B show a graphical user interface according to an embodiment of this application;
FIG. 7(a) and FIG. 7(b) show another graphical user interface according to an embodiment of this application;
FIG. 8(a) to FIG. 8(c) show a resource allocation scenario and a group of graphical user interfaces according to an embodiment of this application;
FIG. 9(a) to FIG. 9(d) show another resource allocation scenario and a group of graphical user interfaces according to an embodiment of this application;
FIG. 10(a) to FIG. 10(b)-2 show another resource allocation scenario and a group of graphical user interfaces according to an embodiment of this application;
FIG. 11(a) to FIG. 11(b)-2 show another resource allocation scenario and a group of graphical user interfaces according to an embodiment of this application;
FIG. 12(a) to FIG. 12(b)-2 show another resource allocation scenario and a group of graphical user interfaces according to an embodiment of this application;
FIG. 13(a) to FIG. 13(b)-2 show another resource allocation scenario and a group of graphical user interfaces according to an embodiment of this application;
FIG. 14(a) to FIG. 14(d)-2 show another resource allocation scenario and a group of graphical user interfaces according to an embodiment of this application;
FIG. 15 is a schematic flowchart of a resource allocation method according to an embodiment of this application;
FIG. 16 is a schematic block diagram of a control apparatus according to an embodiment of this application; and
FIG. 17 is a schematic block diagram of another control apparatus according to an embodiment of this application.

### DESCRIPTION OF EMBODIMENTS

The following describes technical solutions of embodiments in this application with reference to accompanying drawings.

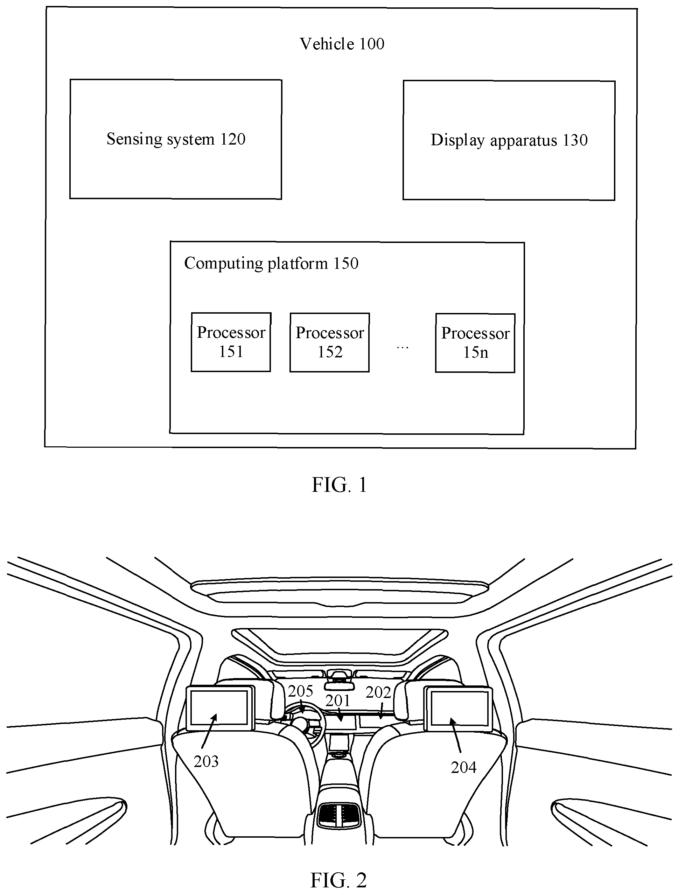

FIG. 1 is a schematic functional block diagram of a vehicle 100 according to an embodiment of this application. The vehicle 100 may include a sensing system 120, a display apparatus 130, and a computing platform 150. The sensing system 120 may include one or more sensors that sense information about an environment around the vehicle 100. For example, the sensing system 120 may include a positioning system. The positioning system may be a global positioning system (global positioning system, GPS), or may be a BeiDou system or another positioning system, or an inertial measurement unit (inertial measurement unit, IMU). The sensing system 120 may also include one or more of a lidar, a millimeter wave radar, an ultrasonic radar, and an image shooting apparatus.

A part of or all functions of the vehicle 100 may be controlled by the computing platform 150. The computing platform 150 may include one or more processors, for example, processors 151 to 15n (n is a positive integer). The processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of hardware circuits. The logical relationship of the hardware circuits is fixed or reconfigurable. For example, the processor is an application-specific integrated circuit (application-specific integrated circuit, ASIC), or a hardware circuit implemented by a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of a part or all of the foregoing units. In addition, the circuit may alternatively be a hardware circuit designed for artificial intelligence, and may be understood as an ASIC, for example, a neural network processing unit (neural network processing unit, NPU), a tensor processing unit (tensor processing unit, TPU), and a deep learning processing unit (deep learning processing unit, DPU). In addition, the computing platform 150 may further include a memory. The memory is configured to store instructions. A part or all of the processors 151 to 15n may invoke the instructions in the memory and execute the instructions to implement a corresponding function.

The display apparatus 130 in a cockpit is mainly classified into two categories, the first category is a vehicle-mounted display; and the second category is a projection display. The vehicle-mounted display is a physical display, and is an important part of an in-vehicle infotainment system. A plurality of displays may be disposed in the cockpit, such as a digital instrument display screen, a central display screen, a display in front of a passenger (also referred to as a front passenger) in a front passenger seat, a display in front of a left rear passenger, and a display in front of a right rear passenger, and even a window can be used as a display. Head-up display, also known as a head-up display system, is mainly used to display driving information such as a speed and navigation on a display device (for example, a windshield) in front of a driver, to reduce line of sight transfer time of the driver, avoid a pupil change caused by line of sight transfer of the driver, and improve driving safety and comfort. The HUD may include a combiner head-up display (combiner-HUD, C-HUD) system, a windshield head-up display (windshield-HUD, W-HUD) system, and an augmented reality head-up display (augmented reality HUD, AR-HUD) system.

For example, FIG. 2 is a schematic diagram of a vehicle cockpit scenario according to an embodiment of this application. As shown in FIG. 2, a vehicle cockpit may include one or more vehicle-mounted display apparatuses. For example, a vehicle cockpit may include a plurality of displays such as a central display screen 201 (or may be referred to as a central display screen), a display 202 (or may be referred to as a front passenger entertainment screen, or a front passenger screen for short), a display 203 (or may be referred to as an entertainment screen in a second-row left area, or a second-row left screen for short), a display 204 (or may be referred to as an entertainment screen in a second-row right area, or a second-row right screen for short), and a display 205 (or may be referred to as an instrument display screen). For another example, a W-HUD or the like (not shown in FIG. 2) may be further included.

It should be understood that a graphical user interface (graphical user interface, GUI) in the following embodiments is described by using the five-seat vehicle shown in FIG. 2 as an example. Embodiments of this application are not limited thereto. For example, for a seven-seat vehicle, a cockpit may include a central display screen, a front passenger entertainment screen, an entertainment screen in a second-row left area, an entertainment screen in a second-row right area, an entertainment screen in a third-row left area, and an entertainment screen in a third-row right area. For another example, for a bus, a cockpit may include a front entertainment screen and a rear entertainment screen, or the cockpit may include a display in a driver area and an entertainment screen in a passenger area.

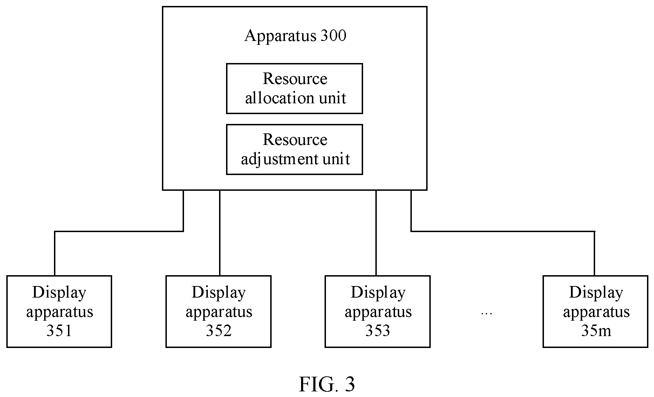

For example, FIG. 3 is a schematic diagram of a system according to an embodiment of this application. The system may include an apparatus 300 and one or a plurality of display apparatuses, for example, display apparatuses 351 to 35m (m is a positive integer). By using this architecture, the apparatus 300 may allocate resources to the plurality of display apparatuses. The display apparatus may implement, based on the resources allocated to the display apparatus, a function displayed by the display apparatus. The apparatus 300 may also implement scheduling of the resources allocated to the plurality of display apparatuses. In an implementation, the entertainment screen in the passenger area may alternatively be disposed on the top of the cockpit.

In some possible implementations, the apparatus 300 may dynamically adjust, based on tasks corresponding to the plurality of display apparatuses, resources corresponding to the plurality of display apparatuses. For example, the apparatus 300 may be connected to the display apparatus through an interface. The display apparatus may implement a display function of the display apparatus based on resources such as a CPU, a GPU, a memory, and a cache that are allocated by the apparatus 300 to the display apparatus. When the apparatus 300 is connected to the plurality of display apparatuses, resources corresponding to the display apparatus may be adjusted, for example, resources such as CPUs, GPUs, memories (memories, Mems), and caches that correspond to the plurality of display apparatuses including the display apparatus are adjusted based on a user input for a display apparatus. The CPU may include one or more cores. A quantity of CPU cores may refer to a quantity of cores of the CPU, and a core of the CPU may be denoted as a CPU core. For another example, when the apparatus 300 is connected to the display apparatus through a communication interface, resources corresponding to the display apparatus are adjusted, in other words, resources corresponding to the interface are adjusted. In embodiments of this application, the resources corresponding to the display apparatus are adjusted, so that resource allocation flexibility can be improved, resource utilization can be improved, a response to a user input can be improved, user experience can be improved, and normal running of another display can be ensured.

For example, the apparatus 300 may be a vehicle, a chip, an in-vehicle infotainment system, or a vehicle-mounted terminal, may be a system-on-chip (system-on-chip, SoC), or the like. The in-vehicle infotainment system and the vehicle-mounted terminal may include one or more chips. For example, when the apparatus 300 is a vehicle, the display apparatus may be a display apparatus included in the vehicle (for example, the display apparatus 201 or 202 in FIG. 2). For example, when the apparatus 300 is a chip, an in-vehicle infotainment system, or the like, the display apparatus may be a display apparatus associated with the chip, the in-vehicle infotainment system, or the like (for example, a display apparatus connected to the chip or the in-vehicle infotainment system, and controlled by the chip or the in-vehicle infotainment system). For ease of explanation and description, this application is subsequently described by using an example in which the apparatus is a SoC. In other words, the SoC described subsequently in this application may be replaced with the apparatus 300.

It should be understood that in the foregoing implementation, an example in which the apparatus 300 can separately control different display apparatuses is used for description. Embodiments of this application are not limited thereto. For example, the apparatus 300 may further control display of different display areas in a same display apparatus. For example, a central display screen and a front passenger screen of the vehicle may be different display areas (for example, a central control display area and a front passenger display area) of a same display, and the apparatus 300 may allocate respective resource proportions to different display areas of the display, to implement display functions of the different display areas of the display. Such a display apparatus that may be divided into a plurality of display areas may be referred to as a long screen.

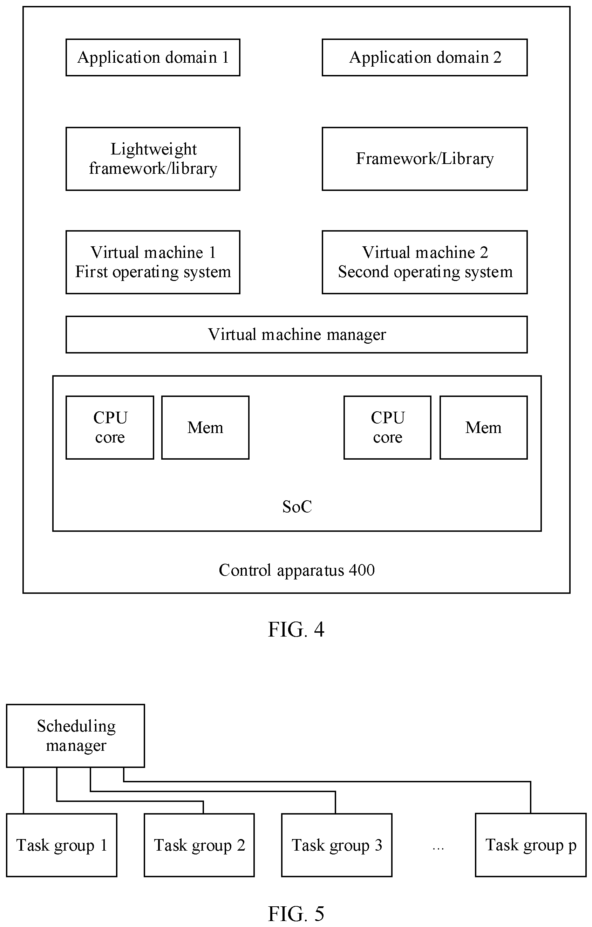

For example, FIG. 4 is a schematic diagram of a system architecture of a control apparatus according to an embodiment of this application. The control apparatus 400 may be an example of the apparatus 300 in FIG. 3. A function of a hardware system required by an operating system is simulated by using a virtual machine. The control apparatus 400 may run one or more types of operating systems, and manage the operating systems by using the virtual machine. When a plurality of types of operating systems are running, a virtual machine manager (hypervisor) may be used to manage a plurality of virtual machines. In a virtual environment, the hypervisor may schedule hardware resources such as a CPU core, an external device, and a memory, allocate different resources to each virtual machine, and isolate resources occupied by each virtual machine. Under coordination and control of the hypervisor, a plurality of operating systems can share resources in terms of hardware, and keep independent of each other in terms of software. Therefore, when a software fault or breakdown occurs in any operating system, other operating systems can still run normally. Real-time task processing can be implemented in the operating system based on a preemptable priority scheduling policy.

For example, based on this architecture, the control apparatus 400 may allocate resources to a display apparatus. For example, a virtual machine 1 may run a first operating system, for example, a real-time operating system (real-time operating system, RTOS), a QNX operating system, or a guest Linux operating system (guest Linux operating system), and an application domain 1 may run on the virtual machine 1 based on a lightweight framework/library. For example, the application domain 1 may include an instrument application. An instrument display screen may display an application of an instrument domain, applications of an airbag fault indicator, a low tire pressure and a tire pressure system fault indicator, a brake system warning indicator, a steering lock system fault indicator, and an anti-lock brake system fault indicator, and the like. A virtual machine 2 may run a second operating system, and the operating system may be the same as or different from the first operating system. In an implementation, the operating system is, for example, a guest Linux operating system, a Harmony operating system, an Android operating system, or another operating system (for example, another operating system based on a Linux architecture), and an application domain 2 may run on the virtual machine 2 based on a framework/library. For example, the application domain 2 may include an in-vehicle infotainment (in-vehicle infotainment, IVI) application, and a display 201, a display 202, a display 203, and a display 204 may display the IVI application, for example, a video application, a game application, a social application, a navigation application, a browser application, a gallery application, or the like. The displays 201, 202, 203, and 204 may also be referred to as IVI entertainment screens.

For example, memory space may be divided into configurable resource pools, and address space is allocated to a corresponding task, so that a corresponding memory may be allocated to the plurality of screens. It should be understood that for a memory allocation method, refer to a related technology. Details are not described herein again.

For example, based on a virtualization technology, for example, virtualization of a CPU or a GPU, corresponding resources may be allocated to the plurality of displays based on a resource requirement of a task. For example, different tasks are related based on a running status of an application. A resource required by a task may be represented by a computing power requirement of the task, and a parameter representing computing power performance, for example, dhrystone million instructions executed per second (dhrystone million instructions executed per second, DMIPS), may be used to represent computing power of the CPU and the resource required by the task. For another example, a resource required by a task may be represented based on a proportion of the resource required by the task to a resource like a CPU, a memory, or a GPU. In embodiments of this application, resources may be dynamically allocated to the display based on the resource required by the task.

For example, FIG. 5 is a schematic diagram of a resource scheduling method according to an embodiment of this application.

For example, resource scheduling may be implemented in a level-2 scheduling manner. For example, a level-1 scheduler may obtain task groups through division based on a display, an operating system, and the like, to create scheduling partitions, so as to isolate resources such as a CPU, a memory, and a cache in each scheduling partition. For example, a plurality of task groups of an instrument domain may be obtained through division based on a driving safety priority, a real-time performance priority, and the like, and a task group 1, a task group 2, and a task group 3 may be allocated to the instrument domain. For example, the task group 1 may include tasks corresponding to applications such as a tire pressure system fault warning, a steering lock system fault indicator, and an airbag fault indicator. The task group 2 may include tasks corresponding to applications such as a vehicle speed, a battery level, a high beam indicator, and a low beam indicator. The task group 3 may include tasks corresponding to applications such as music and navigation. Tasks related to the task group 1 to the task group 3 may be displayed on an instrument display screen. For example, in a high beam state, the instrument display screen may display an indicator and an identifier of the high beam state, and the like. A plurality of task groups of an IVI domain may be obtained through division based on an application type or the like. A task group 4 to a task group p (p is a positive integer) may be allocated to the IVI domain. For example, the task group 4 may include a task corresponding to a video application, and the task group 5 may include a task corresponding to a game application. Alternatively, a plurality of task groups of an IVI domain may be obtained through division based on a display apparatus. For another example, a scheduling partition (or referred to as a partition) may be determined based on the divided task groups. For example, a scheduling partition 1 may include task groups 1 to 3, and a scheduling partition 2 may include task groups 4 to p. In other words, the scheduling partition 1 may correspond to the virtual machine 1 shown in FIG. 4, and the scheduling partition 2 may correspond to the virtual machine 2 shown in FIG. 4. For another example, the scheduling partition 1 may include tasks 1 and 2, and the scheduling partition 2 may include task groups 4 and 5. In other words, the scheduling partition 1 may include a part of resources of the virtual machine 1 shown in FIG. 4, the scheduling partition 2 may include a part of resources of the virtual machine 2, and the like. For another example, a level-2 scheduler may implement real-time processing on a task in a partition based on a priority scheduling policy. For example, the scheduling policy may be a round robin (round robin, RR) scheduling policy, a first in first out (first in first out, FIFO) scheduling policy, a sporadic (sporadic) scheduling policy, and the like. For another example, the priority scheduling policy may be determined based on a task type. For example, a priority of a voice interaction task may be higher than a priority of a game application task and/or a priority of a video application task, the priority of the game application task may be higher than the priority of the video application task, and the like. For example, in a process of running the game application task and the video application task, when a new voice interaction task is obtained, resources used for the video application task may be preferentially adjusted to the voice interaction task, to ensure running of the voice interaction task. In this way, real-time processing of a task in a partition can be implemented based on a scheduling policy.

In some possible implementations, resources may be dynamically allocated to a plurality of screens based on a usage scenario, to improve resource utilization.

For example, in different usage scenarios, a user may use different applications. Therefore, the display apparatus may correspond to different tasks, and may further have different resource requirements. For example, in a case 1, a music application is run on a display 202, and a video application is run on a display 203. In a case 2, a voice interaction task is run on the display 202, and a mail application is run on the display 203. In the two cases, resource requirements of the display 202 and the display 203 may be different. When an application running on the display 202 is switched from a music application to a voice interaction task, a SoC may increase a resource proportion of the display 202, to facilitate smooth running of the task on the display 202, thereby improving user experience through appropriate resource allocation.

Further, after resources corresponding to each display apparatus are scheduled, a resource proportion corresponding to each display apparatus may change. For example, at a moment t0, a proportion of resources allocated to a display 201 is 40%. At a moment t1, when a voice interaction input of the user is detected, and the display 201 is configured to respond to a voice interaction operation of the user, more resources may be scheduled for the display. For example, after resource scheduling is completed, a proportion of resources corresponding to the display 201 may be 45%. For another example, resources in a same scheduling partition may be first scheduled. For example, the displays 201 and 202 may correspond to a same partition. When a voice interaction of the user for the display 201 is detected, resources in the partition corresponding to the display 201 and the display 202 may be scheduled by using the level-2 scheduler, to reduce a quantity of times of resource allocation between partitions, thereby reducing resource scheduling overheads.

In some possible implementations, resource scheduling may be performed based on a computing power requirement of a task. For example, as an application runs, different tasks may be related, and resource scheduling is performed based on computing power requirements of the tasks, or resource scheduling is performed based on a running status of the application. For another example, the computing power requirement of the task may be determined based on resources used when the task is previously executed. For another example, the computing power requirement of the task may be determined based on a test result of a user (for example, a developer) for the apparatus and the application, and the like. Examples are not described one by one herein. For another example, at a moment t2, a proportion of resources allocated to the display 201 is 40%, and a proportion of resources used by a task related to the display 201 is 20%. When a user input for the display is detected, based on a computing power requirement of a task corresponding to the input, when resources corresponding to the display 201 can meet the computing power requirement of the task, the resource proportion of the display 201 may not be adjusted; or when resources allocated to the display 201 cannot meet the computing power requirement of the task, resources may be scheduled. In this way, dynamic resource allocation can be implemented.

In embodiments of this application, resource allocation of the instrument display screen and an IVI entertainment screen may be implemented by using two-level schedulers based on a usage scenario, so that resource isolation and reliability of the instrument display screen and the IVI entertainment screen can be ensured, and resource utilization can be improved. In addition, a fast channel between scheduling tasks can be used, to reduce ineffective switching overheads.

For ease of explanation and description, in embodiments of this application, an example in which a same control apparatus (for example, a vehicle-mounted chip, an in-vehicle infotainment system, or a vehicle-mounted terminal) supports resource allocation among the instrument display screen, a central display screen (namely, the display 201), and a front passenger screen (namely, the display 202) is subsequently used for description. Certainly, the control apparatus may alternatively support resource allocation among more displays (for example, the instrument display screen, the display 201, the display 202, and the display 203), or fewer displays (for example, the instrument display screen and the display 201), or a combination of other displays (for example, a combination of the instrument display screen, the central display screen, and the display 203). This is not limited in embodiments of this application.

In addition, in an actual scenario, computing power and performance of control apparatuses such as a chip and an in-vehicle infotainment system may be different. For ease of explanation and description, in the following embodiments, a proportion of resources allocated to a display relative to resources of the control apparatus is used as an example to describe resource allocation. For example, 20%, 40%, and 40% of resources are respectively allocated to the instrument display screen, the central display screen, and the front passenger screen (in other words, resources of the instrument display screen, the central display screen, and the front passenger screen are 20%, 40%, and 40% respectively), which may mean that proportions of resources allocated to the instrument display screen, the central display screen, and the front passenger screen in resources of the control apparatus are respectively 20%, 40%, and 40%.

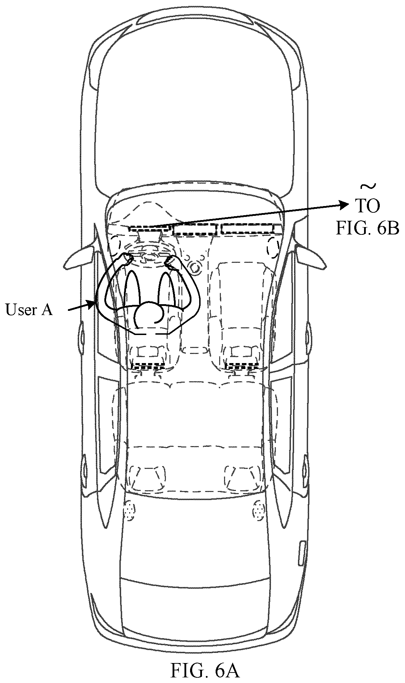

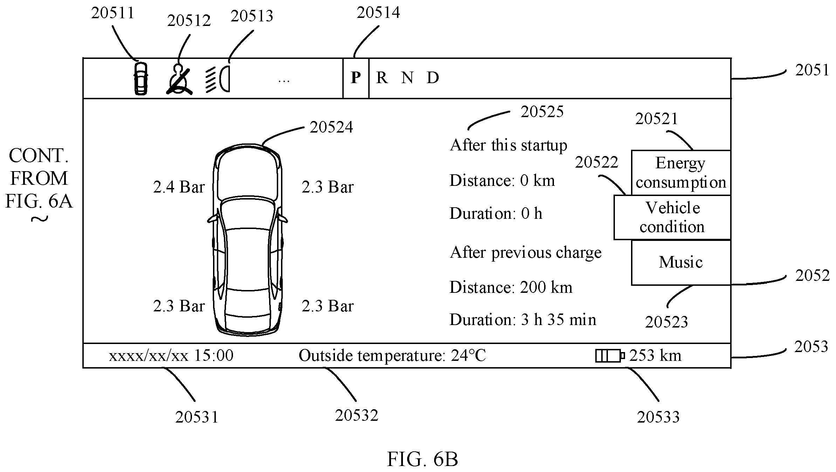

For example, FIG. 6A and FIG. 6B show a graphical user interface according to an embodiment of this application.

As shown in FIG. 6A and FIG. 6B, a user A is located in a driver area of a cockpit of a vehicle. In this case, an instrument display screen may display a status bar 2051, a content display area 2052, and a function bar 2053. The status bar 2051 may display a status icon of the vehicle. For example, the status bar 2051 may include a door status icon 20511, a seat belt icon 20512, a high or low beam light icon 20513, a gear icon 20514, and the like. The content display area 2052 may include an energy consumption tab 20521, a vehicle condition status tab 20522, a music tab 20523, and the like. The vehicle condition status tab 20522 may be in an activated state. In other words, currently, the content display area 2052 may mainly display a vehicle condition status. For example, a tire pressure icon 20524 may be used to display a tire pressure of a tire of the vehicle, and a battery level icon 20525 may be used to display a battery level of the vehicle. The function bar 2051 may include a time display icon 20531, a temperature display icon 20532, an endurance mileage icon 20533, and the like.

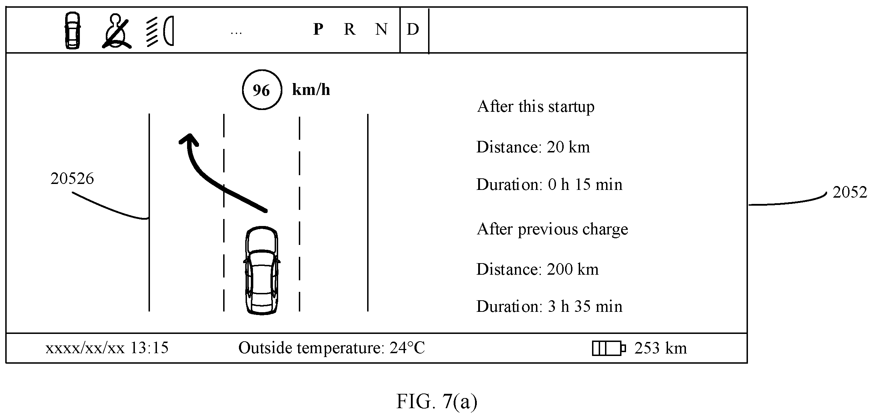

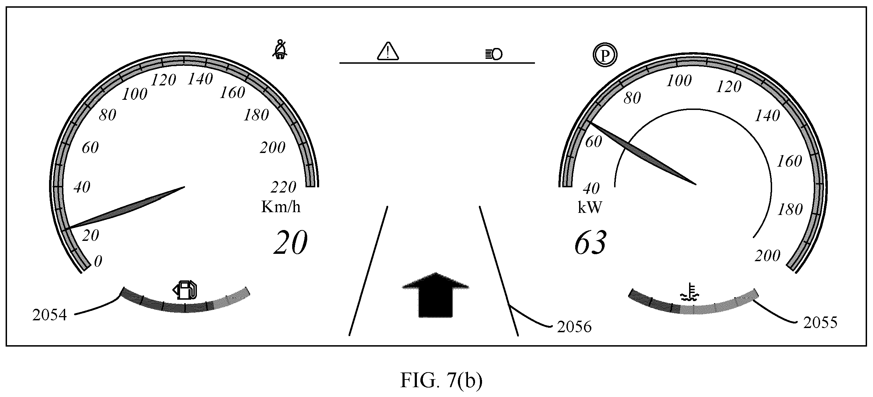

For example, FIG. 7(a) and FIG. 7(b) show another graphical user interface according to an embodiment of this application.

As shown in FIG. 7(a), when a user uses a navigation application during running of a vehicle, an instrument display screen may display a navigation prompt interface 20526. For example, the navigation prompt interface may prompt the user to control the vehicle to travel to a left lane of a current lane. A navigation status icon is displayed on the instrument display screen. This can prevent a driver from diverting attention to the side (for example, a central display screen) and distracting attention.

As shown in FIG. 7(b), the instrument display screen may display a speedometer 2054 and a power meter 2055. In other words, the instrument display screen may display a vehicle speed, power, and the like in a form of an instrument panel. Changes of the vehicle speed, power, and the like are displayed in the form of the instrument panel, and this can provide more intuitive experience for the user.

In some possible implementations, based on a type of the vehicle, the instrument display screen may further display an instrument panel in another form. For example, when the vehicle is driven by an engine, the power meter 2055 may be replaced with an engine tachometer, and the like.

In some possible implementations, the instrument panel may be a combination of a mechanical meter and a display apparatus. For example, the speedometer 2054 may be a mechanical meter, the power meter 2055 may be a mechanical meter, and the navigation prompt interface 2056 may be displayed on the display apparatus.

In some possible implementations, the instrument display screen may include a plurality of display modes. For example, the display modes of the instrument display screen may include an economy mode and a sport mode. After the vehicle is powered on, the instrument display screen may display a graphical user interface according to the economy mode. For example, a display interface of the economy mode may be shown in FIG. 6A and FIG. 6B. When the user uses navigation, the display interface of the instrument display screen may be shown in FIG. 7(a). For example, when it is detected that the user adjusts a driving mode and the display mode of the instrument display screen to the sport mode, the instrument display screen may be displayed in the sport mode. For example, a display interface of the sport mode may be shown in FIG. 7(b). Correspondingly, in different display modes, the instrument display screen may correspond to different tasks, and the instrument display screen may have different requirements for resources.

It should be understood that the foregoing description about the display interface of the instrument display screen is merely an example. This is not limited in embodiments of this application.

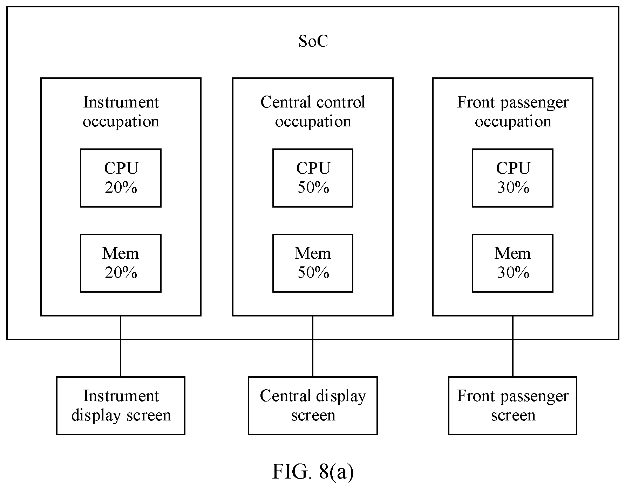

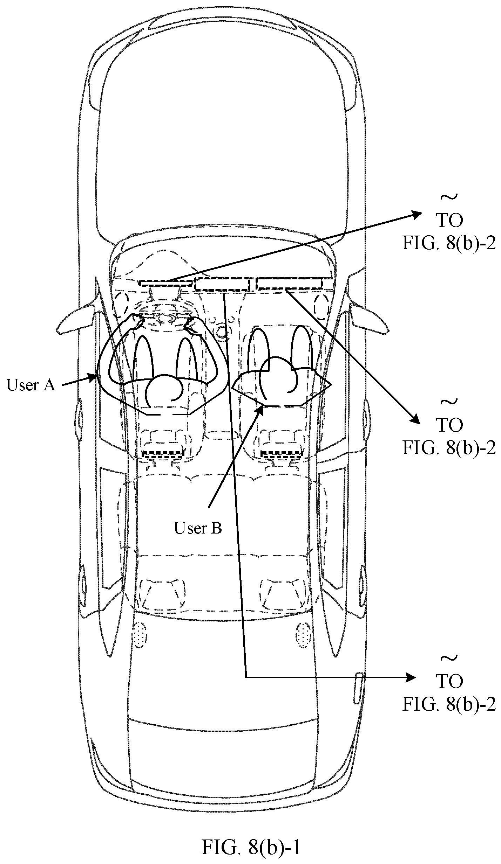

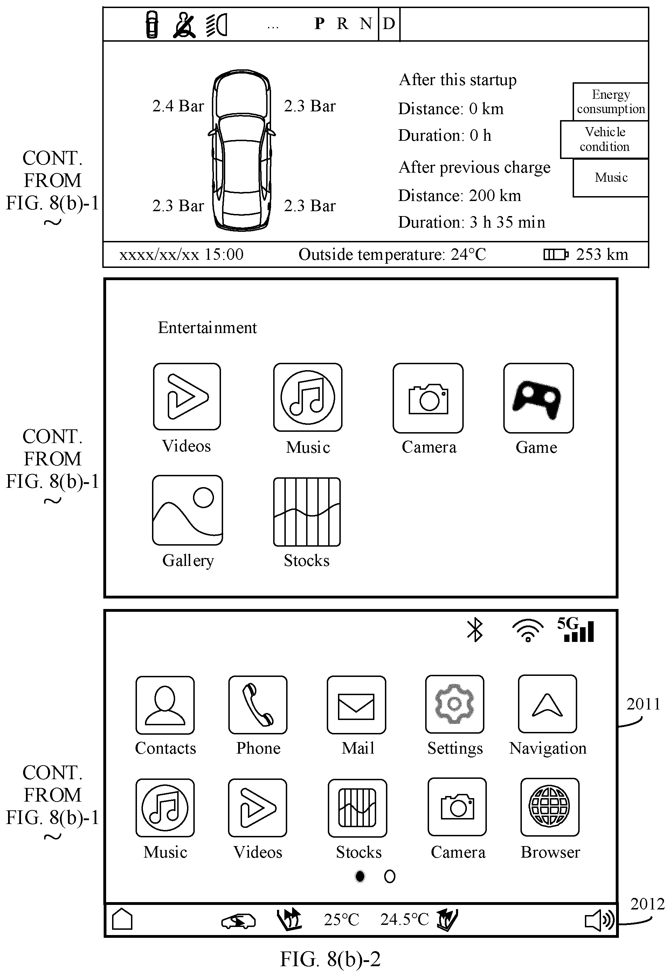

For example, FIG. 8(a) to FIG. 8(c) show a resource allocation scenario and a group of GUIs according to an embodiment of this application.

For example, as shown in FIG. 8(a), a plurality of display apparatuses may include an instrument display screen, a central display screen, and a front passenger screen. The plurality of display apparatuses may be supported by a same SoC, and the SoC may allocate resources to the plurality of display apparatuses. For example, CPUs allocated by the SoC to the instrument display screen, the central display screen, and the front passenger screen may be 20%, 50%, and 30% respectively, and memories allocated by the SoC to the instrument display screen, the central display screen, and the front passenger screen may be 20%, 50%, and 30% respectively.

As shown in FIG. 8(b)-1 and FIG. 8(b)-2, a user Ais located in a driver area of a cockpit of a vehicle, a vehicle cockpit area may further include a user B, and the user B may be located in a front passenger area of the cockpit of the vehicle. As shown in FIG. 8(b)-1 and FIG. 8(b)-2, the instrument display screen may display a status bar, a display area, and a function bar, and the central display screen may display a content display area 2011 and a function bar 2012. Information about an application may be displayed in the content display area 2011. For example, the content display area 2011 may display a first tab in three tabs. The first tab may include an icon of a contacts application, an icon of a phone application, an icon of a mail application, an icon of a settings application, an icon of a navigation application, an icon of a music application, an icon of a video application, and the like. The information about the application displayed on the central display screen may be set when the vehicle is delivered from the factory, or may be added by the user during use. The front passenger screen may also display information about an application. For example, the front passenger screen may display an icon of a video application, an icon of a music application, an icon of a game application, and the like. The front passenger screen may also display information about an application by using a plurality of tabs, and may further display a function bar. In this case, resource allocation among the plurality of display apparatuses may be shown in FIG. 8(a).

In some possible embodiments, information about an application displayed on a display may be related to the user, and before the display displays the information about the application related to the user, the vehicle may authenticate the user. For example, when the user A does not log in to the account on the central display screen, the display may display the icon of the navigation application and the icon of the settings application. When the user A logs in to the account on the central display screen, a GUI displayed on the central display screen in FIG. 8(b)-1 and FIG. 8(b)-2 may be displayed. The vehicle may authenticate the user A in a manner like facial recognition, two-dimensional code detection, and obtaining account and password information entered by the user A. After the user A is authenticated, the GUI shown in FIG. 8(b)-1 and FIG. 8(b)-2 may be displayed.

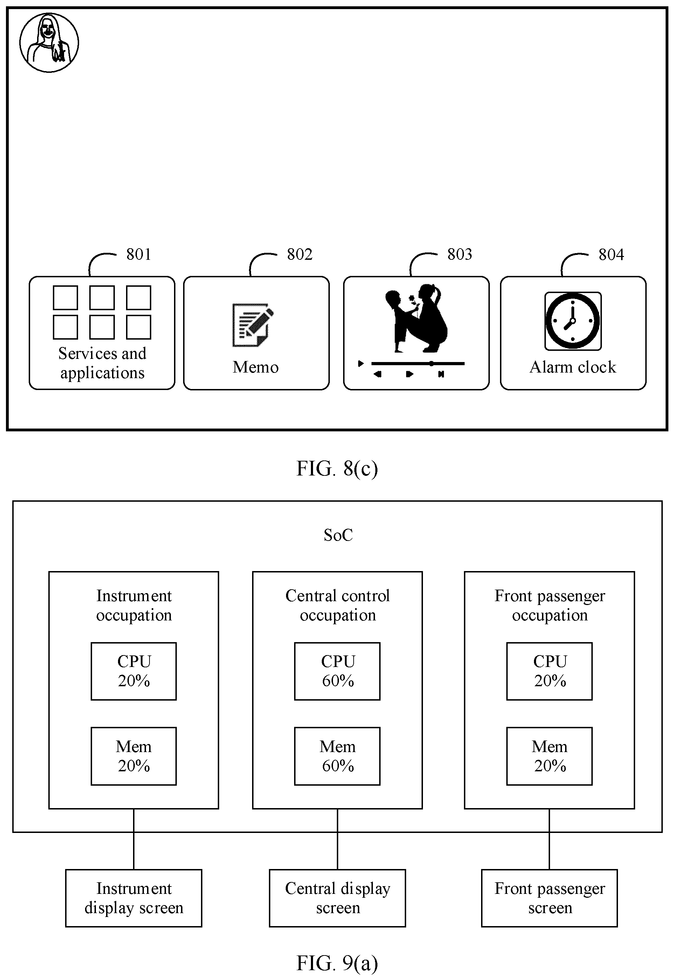

In some possible implementations, the central display screen may alternatively display an icon of an application in a card manner. For example, as shown in FIG. 8(c), a card 801 of services and applications, a card 802 corresponding to a memo, a card 803 corresponding to the video application, a card 804 corresponding to an alarm clock, and the like may be displayed on the central display screen. Text information (for example, applications and services, or the memo) and control information (for example, the memo or an alarm clock control) displayed on a card may be set by the user. Alternatively, only an icon of an application may be displayed on the card. For example, only an icon of an in-vehicle video application is displayed on the card 803. Alternatively, a plurality of applications may be associated. For example, when it is detected that the user taps the card 801, the central display screen may display an interface shown in FIG. 8(b)-1 and FIG. 8(b)-2. Certainly, an interface displayed by another display apparatus like the front passenger screen and 203 may also include one or more cards, the displayed interface may include more or fewer cards, and the displayed card may also be preset or user-defined.

In some possible implementations, the information about the application displayed on the central display screen in the content display area 2011 of the central display screen may be set by the user A in advance, or may be arranged by the vehicle based on frequency of using an application by the user A in a specific time period.

In some possible implementations, a Bluetooth function icon, a Wi-Fi function icon, a cellular network signal icon, and the function bar 2012 that are displayed on the central display screen may be fixed, and the information may not change with user identity information, and may not change with a tab displayed in the content display area. For example, when the central display screen displays a second tab in the three tabs, the Bluetooth function icon, the function bar 2012, and the like may be fixed.

In some possible implementations, information about an application that can be displayed on the display is determined based on a location of the display in the cockpit of the vehicle. For example, because the front passenger screen is located in the front passenger area of the cockpit of the vehicle, the user A located in the driver area may not be able to conveniently obtain navigation information through the front passenger screen when controlling the vehicle to travel. Therefore, the icon of the navigation application and the navigation application may be displayed on the central display screen and cannot be displayed on the front passenger screen. For example, when the user indicates, in the cockpit of the vehicle, to enable navigation by using a voice instruction, the central display screen may display an interface of the navigation application, and the front passenger screen may not display an interface related to navigation.

In some possible implementations, when there is no user in the front passenger area, or when the user in the front passenger area does not interact with the front passenger screen within preset time, the front passenger screen may display a sleep interface.

The sleep interface in embodiments of this application is similar to an always on display (always on display, AOD) interface on a terminal device (for example, a mobile phone or a computer). After the display is screen-off, the vehicle can light, by using a self-luminescence feature of the display, a part of areas on the display to display information such as a clock, a date, a notification, and an animation, so that the user can view related information when the display is screen-off.

In some possible implementations, resource allocation of the plurality of display apparatuses may be determined based on whether a user is detected in a cockpit area corresponding to the display apparatus. For example, when the vehicle is powered on, the instrument display screen may display the GUI shown in FIG. 6A and FIG. 6B, and the central display screen may display the GUI shown in FIG. 8(b)-1 and FIG. 8(b)-2. When the vehicle does not detect a user in the front passenger area, more resources may be allocated to the instrument display screen and the central display screen that are more easily accessible to the driver, so that running and response speeds of the instrument display screen and the central display screen can be improved. For example, in this case, the front passenger screen may display a sleep interface to reduce resource consumption. Correspondingly, in this case, CPUs allocated by the SoC to the instrument display screen, the central display screen, and the front passenger screen may be 25%, 65%, and 10% respectively, and allocated memories may be 25%, 65%, and 10% respectively. When the vehicle detects that there is a user in the front passenger area, the instrument display screen, the central display screen, and the front passenger screen may display the GUI shown in FIG. 8(b)-1 and FIG. 8(b)-2. Resources allocated by the SoC to the plurality of screens may be shown in FIG. 8(a). A resource proportion of the instrument display screen may be greater than or equal to a preset threshold (for example, the resource proportion is 20%), to ensure safe and stable running of the instrument display screen during use of the vehicle. Use requirements of the plurality of display apparatuses may be met by appropriately allocating resources among the plurality of display apparatuses. In other words, when the display interface of the display apparatus is adjusted based on whether there is a user in a cockpit area corresponding to the display interface, because the adjustment of the display interface corresponds to a change in a running status of an application, resource allocation of the display apparatus can be adjusted.

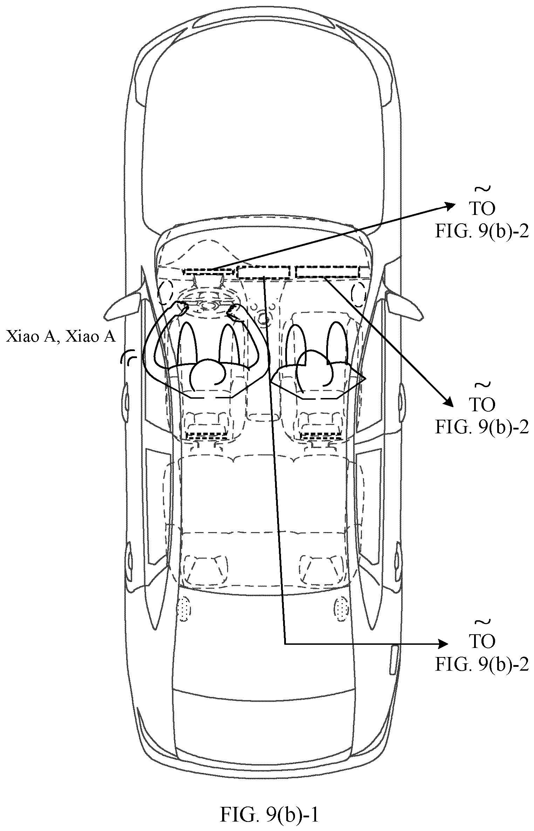

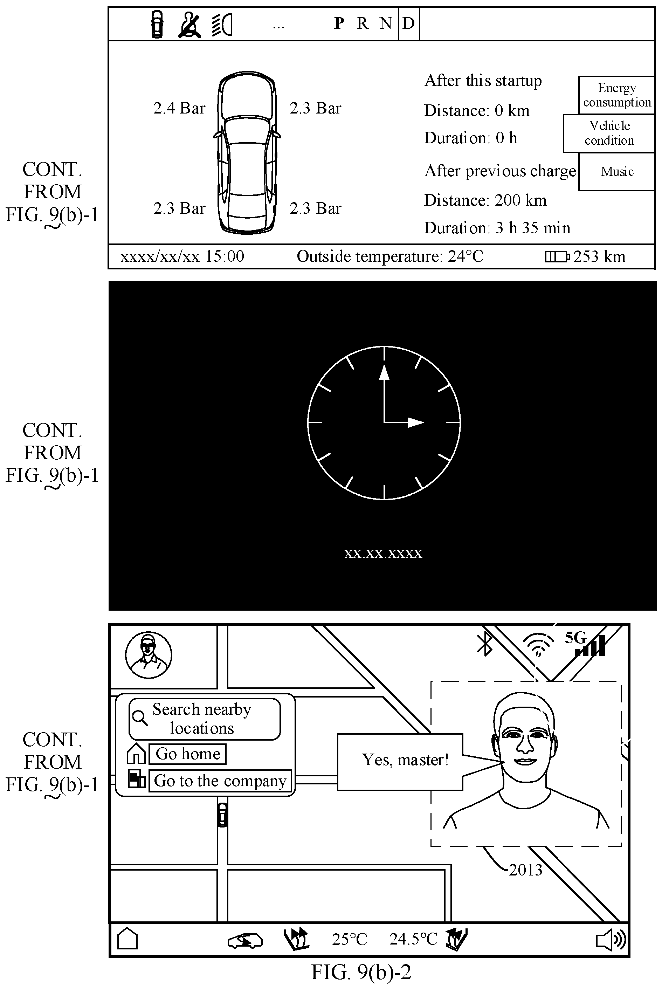

For example, FIG. 9(a) to FIG. 9(d) show another resource allocation scenario and a group of GUIs according to an embodiment of this application.

For example, as shown in FIG. 9(a), a plurality of display apparatuses may include an instrument display screen, a central display screen, and a front passenger screen. The plurality of display apparatuses may be supported by a same SoC, and the SoC may allocate resources to the plurality of display apparatuses. For example, CPUs allocated by the SoC to the instrument display screen, the central display screen, and the front passenger screen may be 20%, 60%, and 20% respectively, and allocated memories may be 20%, 60%, and 20% respectively.

As shown in FIG. 9(b)-1 and FIG. 9(b)-2, a user Ais located in a driver area of a cockpit of a vehicle, a vehicle cockpit area may further include a user B, and the user B may be located in a front passenger area of the cockpit of the vehicle. The central display screen may display a navigation interface and a man-machine interaction model 2013. When the vehicle receives a voice instruction "Xiao A, Xiao A" of a user through a microphone, the vehicle may respond to the voice instruction through the central display screen, for example, the man-machine interaction model may show "Yes, master!", and respond to a subsequent voice instruction of the user. The front passenger screen may display time and a date through a screen-off display function.

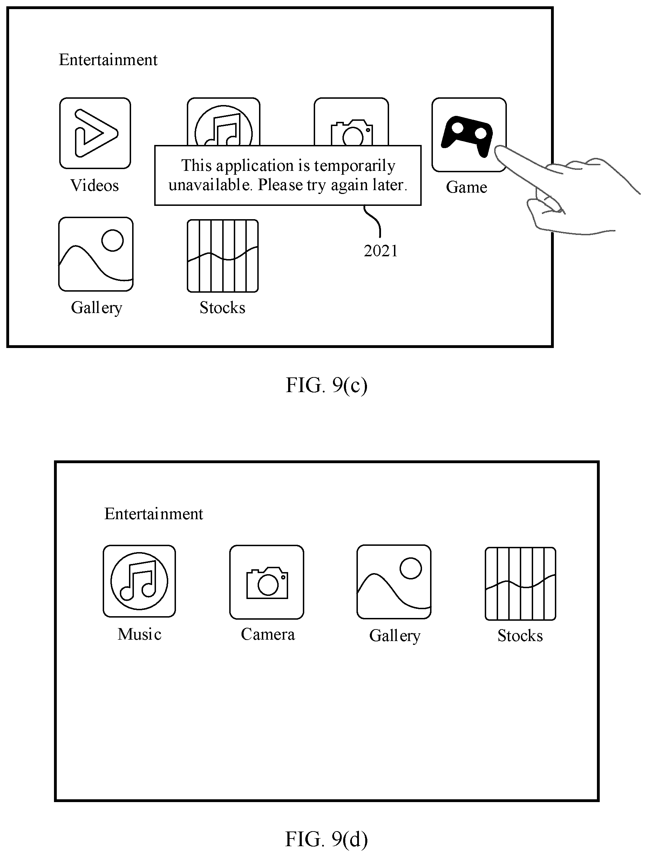

In some possible implementations, resource allocation of the plurality of display apparatuses may be determined based on an application run by the display apparatus. For example, as shown in FIG. 8(b)-1 and FIG. 8(b)-2, the driver area of the vehicle includes the user A, and the front passenger area of the vehicle includes the user B. The instrument display screen, the central display screen, and the front passenger screen may display the GUI shown in FIG. 8(b)-1 and FIG. 8(b)-2. In this case, resource proportions allocated by the SoC that supports the plurality of display apparatuses to the plurality of display apparatuses may be shown in FIG. 8(a). When a voice instruction of a user is detected, the central display screen may display the man-machine interaction model 2013, for example, as shown in FIG. 9(b)-1 and FIG. 9(b)-2. Correspondingly, the SoC may adjust the resource proportions of the plurality of display apparatuses. For example, resources allocated by the SoC to the plurality of display apparatuses may be shown in FIG. 9(a). Further, because a proportion of resources allocated by the SoC to the front passenger screen decreases, the front passenger screen may display a GUI shown in FIG. 9(b)-1 and FIG. 9(b)-2, and a resource requirement is reduced by displaying a sleep interface, or an application that can be used by the front passenger screen may be limited. For example, as shown in FIG. 9(c), when it is detected that the user taps the icon of the game application on the front passenger screen on the GUI shown in FIG. 8(a) to FIG. 8(c), the front passenger screen may display a prompt 2021 (for example, the prompt may be "This application is temporarily unavailable. Please try again later. "). Alternatively, the front passenger screen may display information about a simplified application. As shown in FIG. 9(d), the front passenger screen may display information about a simplified application. For example, compared with that on the GUI shown in FIG. 8(b)-1 and FIG. 8(b)-2, the front passenger screen may display icons of a part of applications. The front passenger screen may display an icon of a music application, an icon of a camera application, an icon of a gallery application, and the like, and icons of a part of applications whose resource proportions are high, for example, an icon of a video application and an icon of a game application, may not be displayed on the front passenger screen. In this way, use of an application that is not displayed by the user is displayed, to reduce a resource requirement of the application on the front passenger screen.

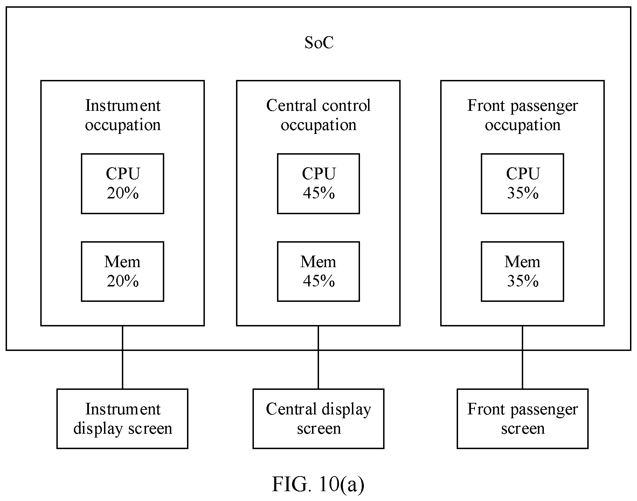

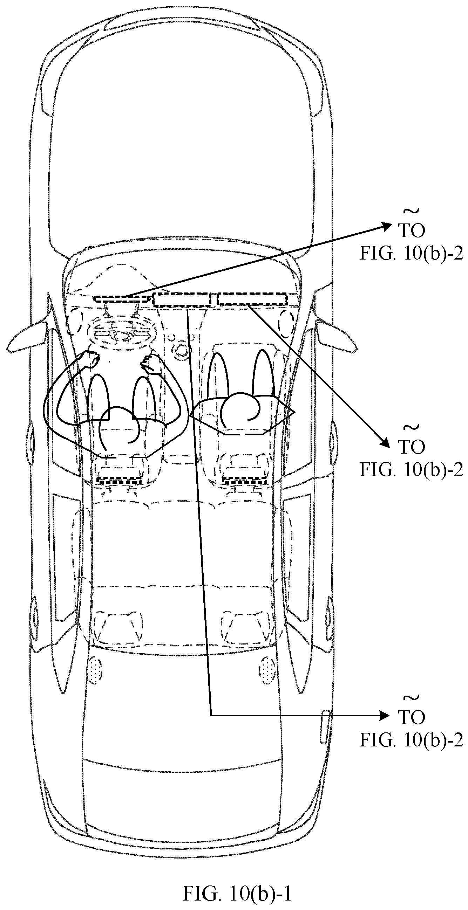

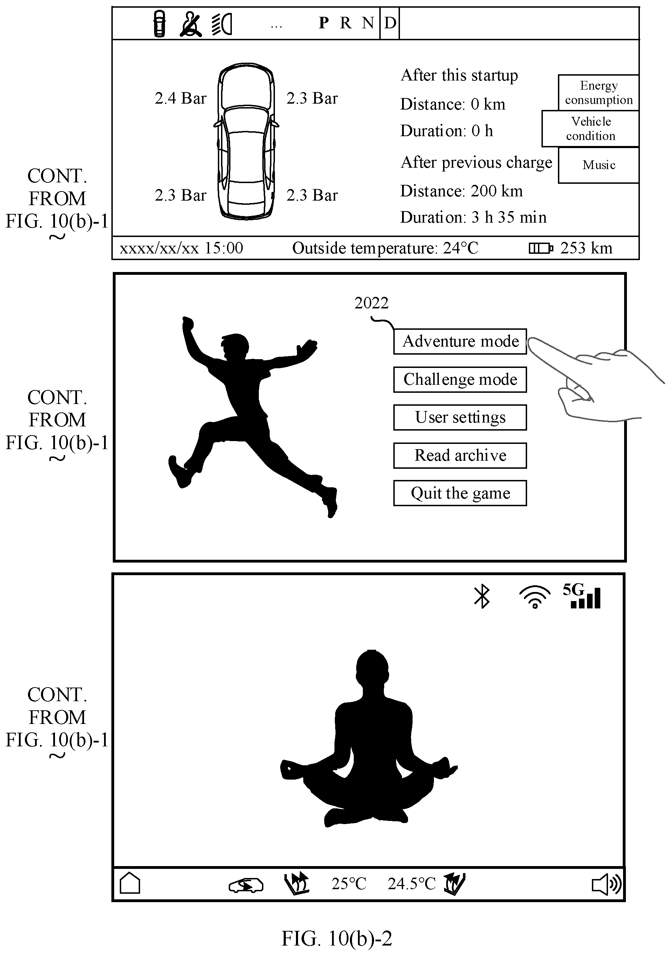

For example, FIG. 10(a) to FIG. 10(b)-2 show another resource allocation scenario and a group of GUIs according to an embodiment of this application.

For example, as shown in FIG. 10(a), a plurality of display apparatuses may include an instrument display screen, a central display screen, and a front passenger screen. The plurality of display apparatuses may be supported by a same SoC, and the SoC may allocate resources to the plurality of display apparatuses. For example, CPUs allocated by the SoC to the instrument display screen, the central display screen, and the front passenger screen may be 20%, 45%, and 35% respectively, and allocated memories may be 20%, 45%, and 35% respectively.

As shown in FIG. 10(b)-1 and FIG. 10(b)-2, when a vehicle is in a traveling state, a user A is located in a driver area of a cockpit of the vehicle, a vehicle cockpit area may further include a user B, and the user B may be located in a front passenger area of the cockpit of the vehicle. After the vehicle detects that a user taps an icon of a game application shown on the front passenger screen, the front passenger screen may display a startup interface of the game application. The startup interface may indicate that the game is started but a main program of the game is not run, for example, as shown in FIG. 10(b)-1 and FIG. 10(b)-2. In this case, the central display screen may display a dynamic or static wallpaper.

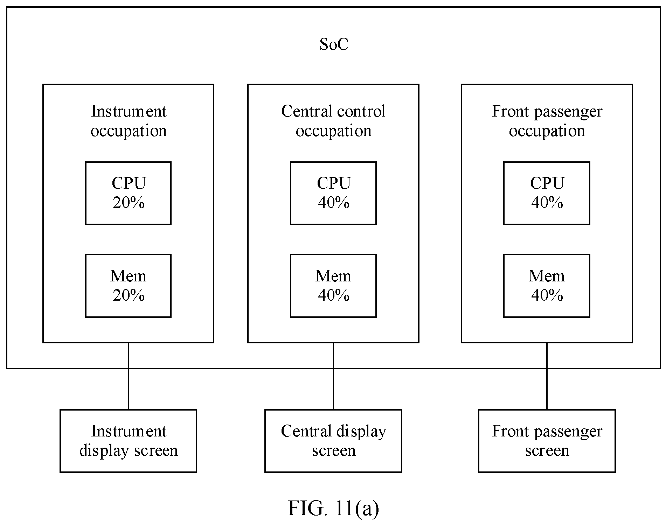

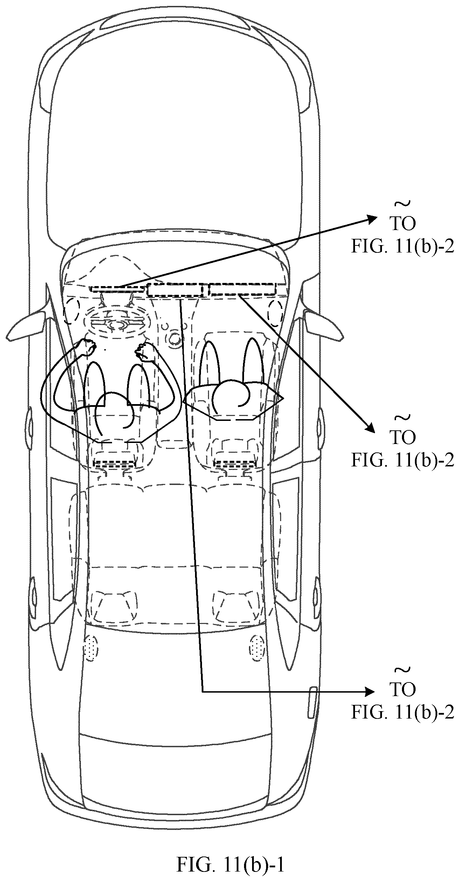

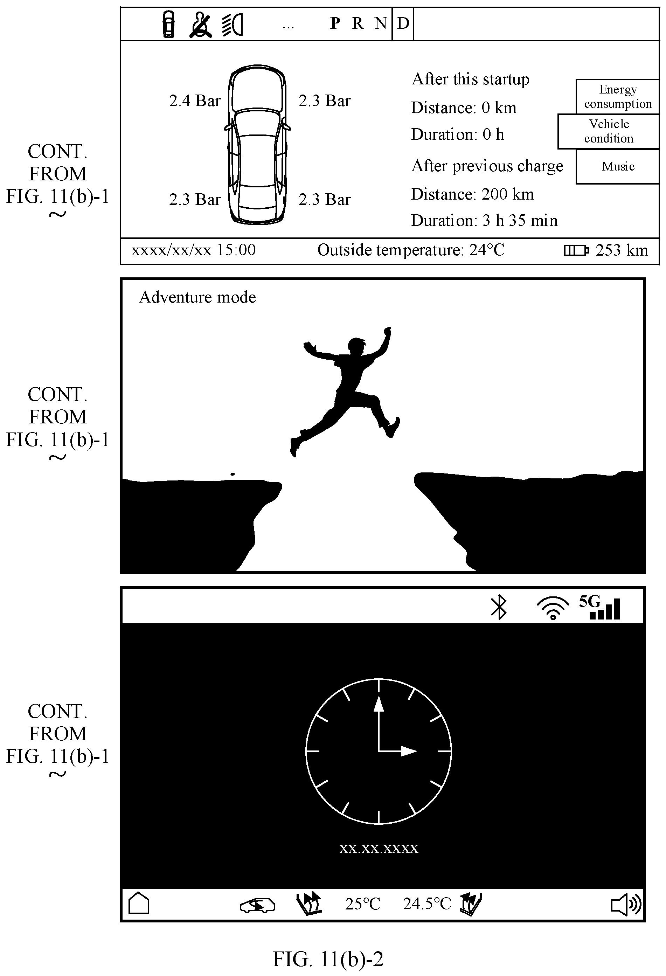

For example, FIG. 11(a) to FIG. 11(b)-2 show another resource allocation scenario and a group of GUIs according to an embodiment of this application.

For example, as shown in FIG. 11(a), a plurality of display apparatuses may include an instrument display screen, a central display screen, and a front passenger screen. The plurality of display apparatuses may be supported by a same SoC, and the SoC may allocate resources to the plurality of display apparatuses. For example, CPUs allocated by the SoC to the instrument display screen, the central display screen, and the front passenger screen may be 20%, 40%, and 40% respectively, and memories allocated by the SoC to the instrument display screen, the central display screen, and the front passenger screen may be 20%, 40%, and 40% respectively.

As shown in FIG. 11(b)-1 and FIG. 11(b)-2, the front passenger screen may display a main program interface of a game application, and the interface may indicate that a main program of a game is run. In this case, the central display screen may display a sleep interface.

In some possible implementations, resource proportions of the plurality of display apparatuses may be determined based on a running status of an application. For example, as shown in FIG. 8(b)-1 and FIG. 8(b)-2, the driver area of the vehicle includes the user A, and the front passenger area of the vehicle includes the user B. The instrument display screen, the central display screen, and the front passenger screen may display the GUI shown in FIG. 8(b)-1 and FIG. 8(b)-2. In this case, resource proportions allocated by the SoC to the plurality of display apparatuses may be shown in FIG. 8(a). After it is detected that the user taps the icon of the game application on the front passenger screen, the front passenger screen may display a startup interface of the game application, for example, a GUI shown in FIG. 10(b)-1 and FIG. 10(b)-2. Correspondingly, the SoC may adjust resource proportions of the plurality of display apparatuses, for example, resources allocated by the SoC to the plurality of display apparatuses may be shown in FIG. 10(a). Smooth running of the game application can be ensured by increasing a proportion of resources of the front passenger screen. In addition, the central display screen may still display the GUI shown in FIG. 8(b)-1 and FIG. 8(b)-2. Alternatively, because a proportion of resources allocated by the SoC to the central display screen decreases, the central display screen may display a sleep interface or a wallpaper interface, for example, the GUI shown in FIG. 10(b)-1 and FIG. 10(b)-2. Further, when it is detected that the user taps a control 2022, the front passenger screen may display a main program interface of the game application, for example, a GUI shown in FIG. 11(b)-1 and FIG. 11(b)-2. Correspondingly, the SoC may adjust resource proportions of the plurality of display apparatuses, for example, resources allocated by the SoC to the plurality of display apparatuses may be shown in FIG. 11(a). Smooth running of the game application can be ensured by increasing a proportion of resources of the front passenger screen. In addition, because the proportion of the resources allocated by the SoC to the central display screen further decreases, the central display screen may display the sleep interface, for example, the GUI shown in FIG. 11(b)-1 and FIG. 11(b)-2.

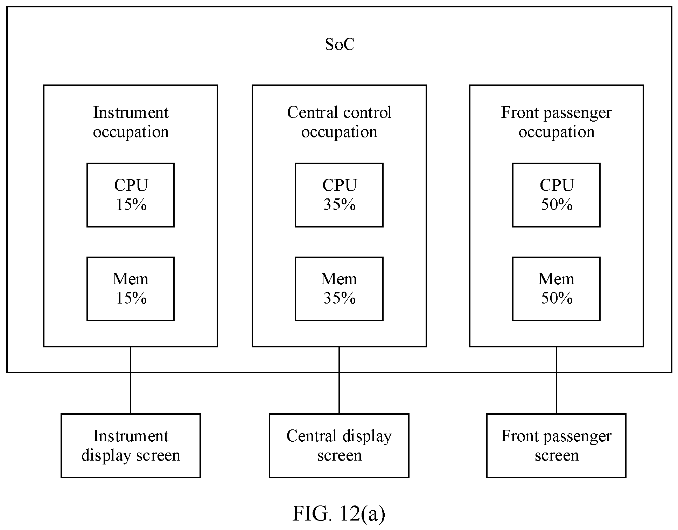

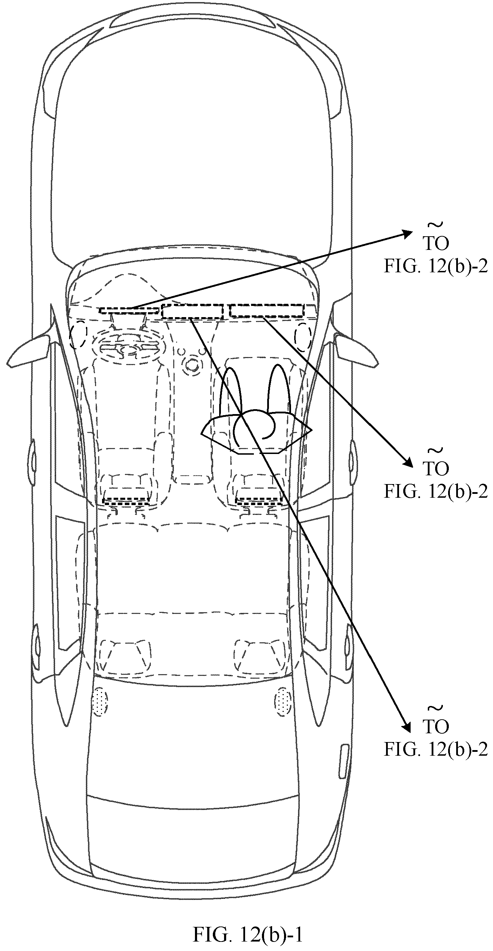

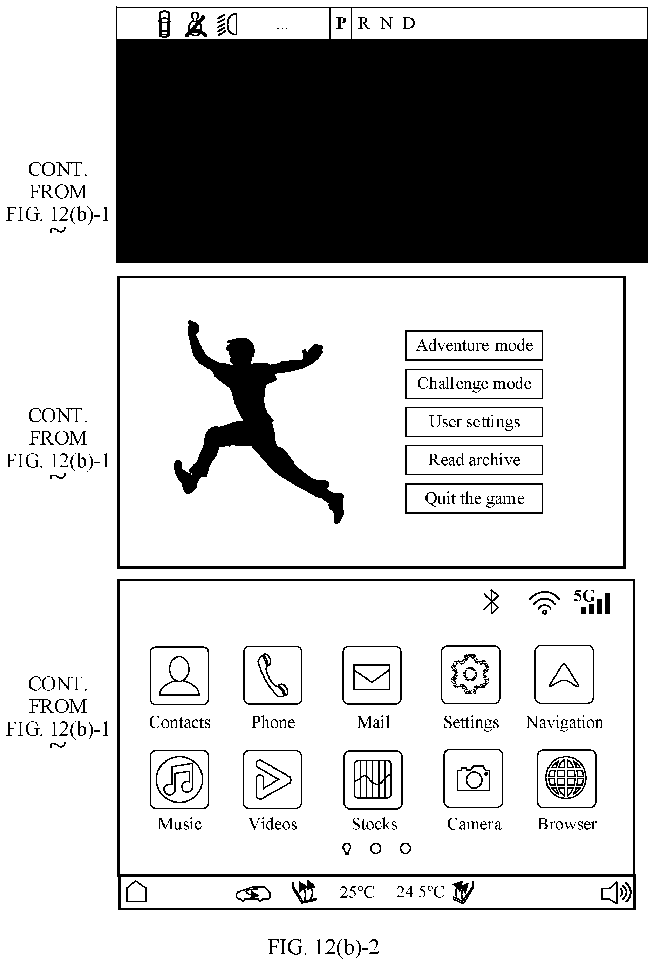

For example, FIG. 12(a) to FIG. 12(b)-2 show another resource allocation scenario and a group of GUIs according to an embodiment of this application.

For example, as shown in FIG. 12(a), a plurality of display apparatuses may include an instrument display screen, a central display screen, and a front passenger screen. The plurality of display apparatuses may be supported by a same SoC, and the SoC may allocate resources to the plurality of display apparatuses. For example, CPUs allocated by the SoC to the instrument display screen, the central display screen, and the front passenger screen may be 15%, 35%, and 50% respectively, and allocated memories may be 15%, 35%, and 50% respectively.

As shown in FIG. 12(b)-1 and FIG. 12(b)-2, when a vehicle is in a parked state, a user may be located in a front passenger area of a cockpit of the vehicle. After the vehicle detects that the user taps an icon of a game application shown on the front passenger screen, the front passenger screen may display a startup interface of the game application. The startup interface may indicate that the game is started but a main program of the game is not run, for example, as shown in FIG. 12(b)-1 and FIG. 12(b)-2. In this case, an instrument display screen 205 may display a sleep interface.

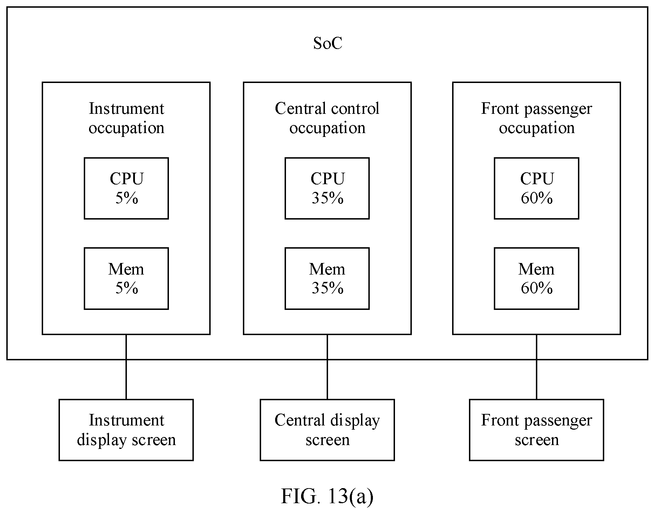

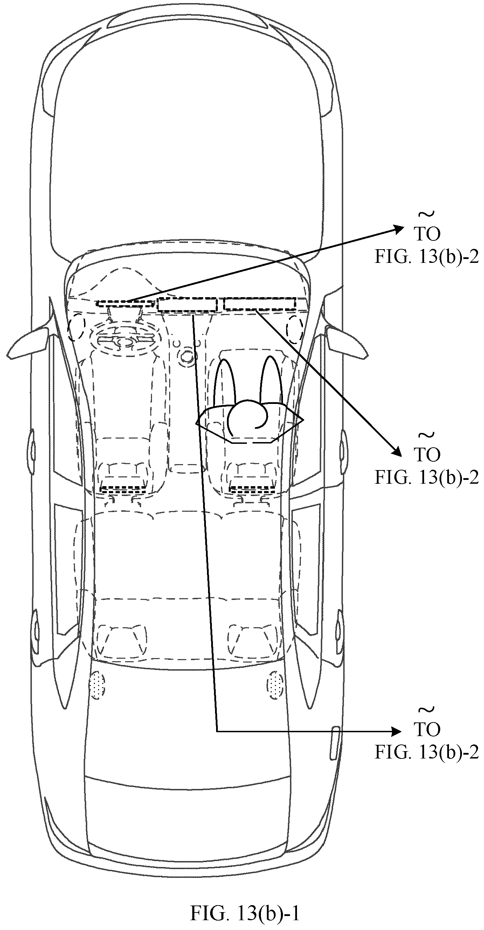

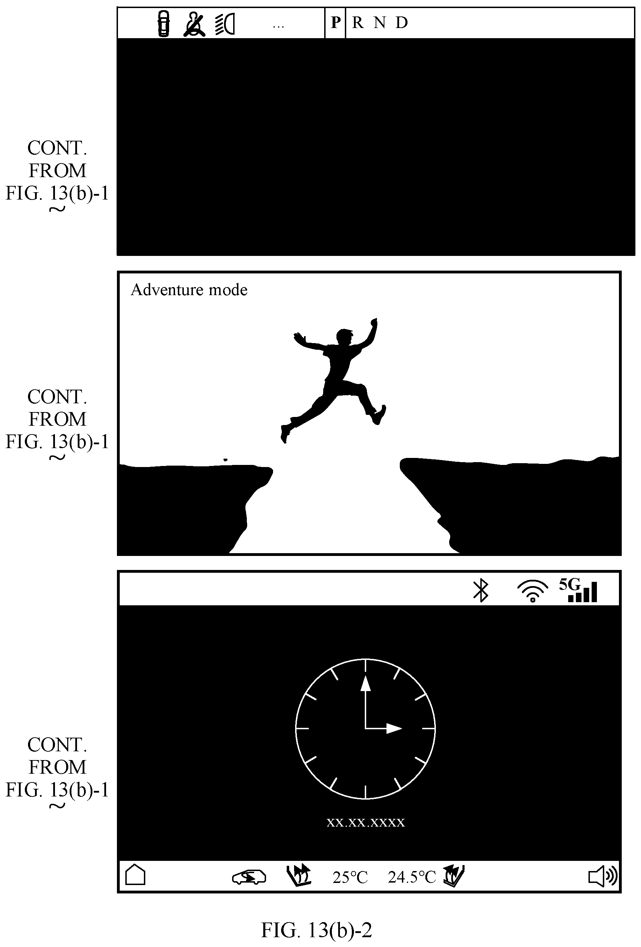

For example, FIG. 13(a) to FIG. 13(b)-2 show another resource allocation scenario and a group of GUIs according to an embodiment of this application.

For example, as shown in FIG. 13(a), a plurality of display apparatuses may include an instrument display screen, a central display screen, and a front passenger screen. The plurality of display apparatuses may be supported by a same SoC, and the SoC may allocate resources to the plurality of display apparatuses. For example, CPUs allocated by the SoC to the instrument display screen, the central display screen, and the front passenger screen may be 5%, 35%, and 60% respectively, and memories allocated by the SoC to the instrument display screen, the central display screen, and the front passenger screen may be 5%, 35%, and 60% respectively.

As shown in FIG. 13(b)-1 and FIG. 13(b)-2, the front passenger screen may display a main program interface of a game application, and the interface may indicate that a main program of a game is run. In this case, the instrument display screen 205 and the central display screen may display a sleep interface.

In some possible implementations, resource proportions of the plurality of display apparatuses may be determined based on a running status of a vehicle. For example, as shown in FIG. 8(b)-1 and FIG. 8(b)-2, the driver area of the vehicle includes the user A, and the front passenger area of the vehicle includes the user B. When the vehicle is in a traveling state, the instrument display screen, the central display screen, and the front passenger screen may display the GUI shown in FIG. 8(b)-1 and FIG. 8(b)-2. In this case, resource proportions allocated by the SoC to the plurality of display apparatuses may be shown in FIG. 8(a). When the vehicle is in a parked state, after it is detected that the user taps the icon of the game application on the front passenger screen, the front passenger screen may display a startup interface of the game application, for example, a GUI shown in FIG. 12(b)-1 and FIG. 12(b)-2. To ensure smooth running of the game application, a proportion of resources of the front passenger screen may be increased. For example, resources of the central display screen and/or the instrument display screen 205 may be allocated to the front passenger screen. For another example, when available resources of the central display screen can meet a resource requirement of the front passenger screen, the available resources of the central display screen may be allocated to the front passenger screen. Further, when the available resources of the central display screen cannot meet the resource requirement of the front passenger screen, resources of the instrument display screen 205 may be allocated to the front passenger screen. For example, idle resources of the central display screen are adjusted to an IVI domain, and are allocated to the front passenger screen. In this case, resources allocated by the SoC to the plurality of displays may be shown in FIG. 12(a). The plurality of displays may display the GUI shown in FIG. 12(b)-1 and FIG. 12(b)-2. For another example, when idle resources of the instrument display screen still cannot meet the resource requirement of the instrument display screen 202, a part of tasks of an instrument domain may be stopped or suspended to release resources of the instrument domain, and the resources are adjusted to the front passenger screen. For another example, further, when it is detected that the user taps the control 2022, the front passenger screen may display the main program interface of the game application shown in FIG. 13(b)-1 and FIG. 13(b)-2, and may suspend or release a part of tasks of an instrument domain, to release resources of the instrument domain, and allocate the resources to the front passenger screen. Resources allocated by the SoC to the plurality of apparatuses may be shown in FIG. 13(a). For another example, after the vehicle is powered on, resource proportions of the plurality of display apparatuses may be shown in FIG. 8(a), and a displayed GUI may be shown in FIG. 8(b)-1 and FIG. 8(b)-2. When the instrument display screen releases the idle resources of the instrument display screen, the instrument display screen may maintain a current GUI of the instrument display screen, for example, still display the GUI shown in FIG. 8(b)-1 and FIG. 8(b)-2, or may display a sleep interface, for example, the GUI shown in FIG. 12(b)-1 and FIG. 12(b)-2. When a proportion of resources allocated to the central display screen decreases, the central display screen may maintain a current display interface, for example, the GUI shown in FIG. 12(b)-1 and FIG. 12(b)-2, or may display a sleep interface, for example, the GUI shown in FIG. 13(b)-1 and FIG. 13(b)-2, or may display a dynamic or static wallpaper, for example, the GUI shown in FIG. 10(b)-1 and FIG. 10(b)-2.

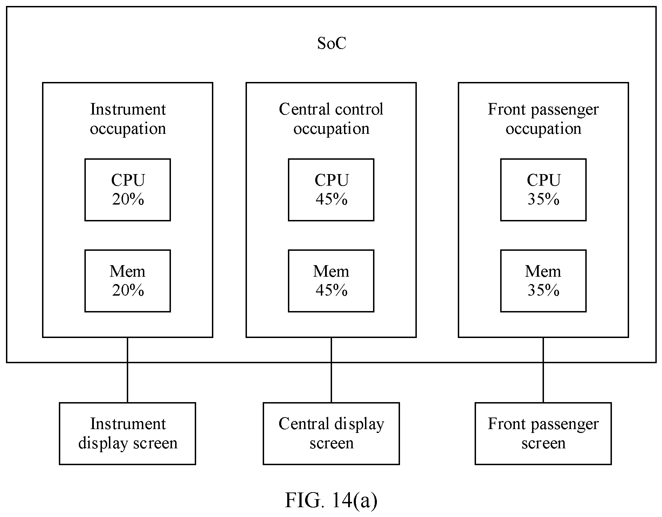

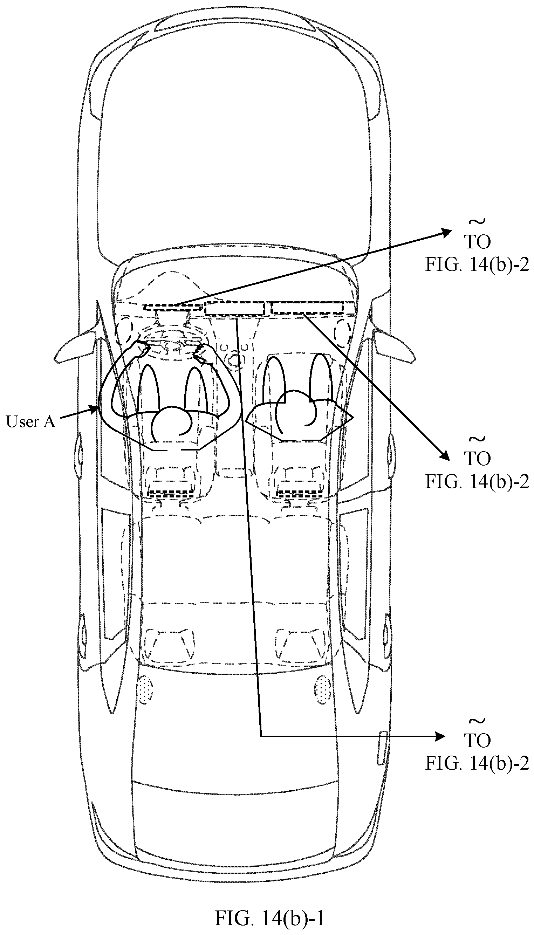

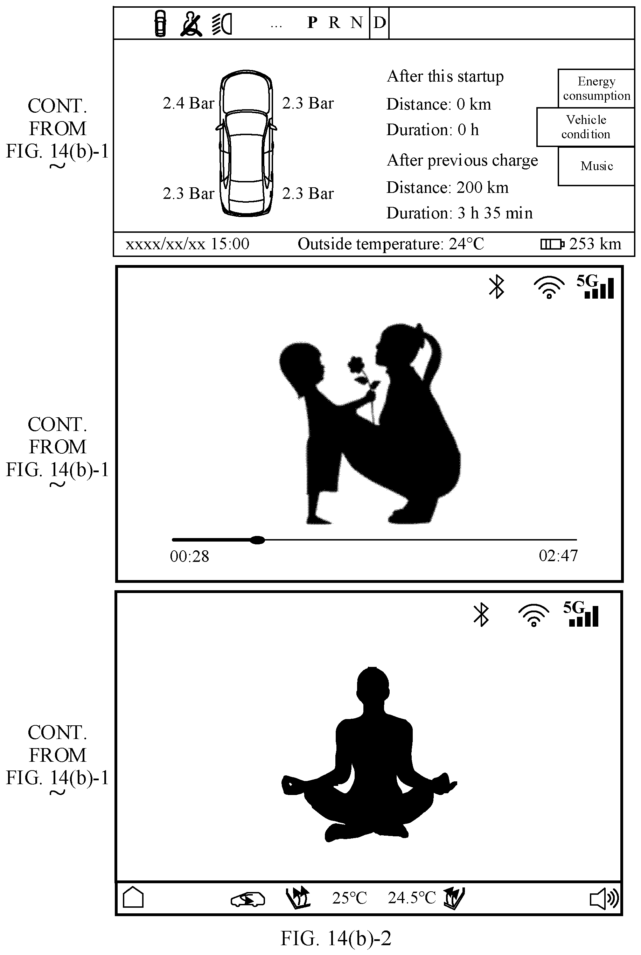

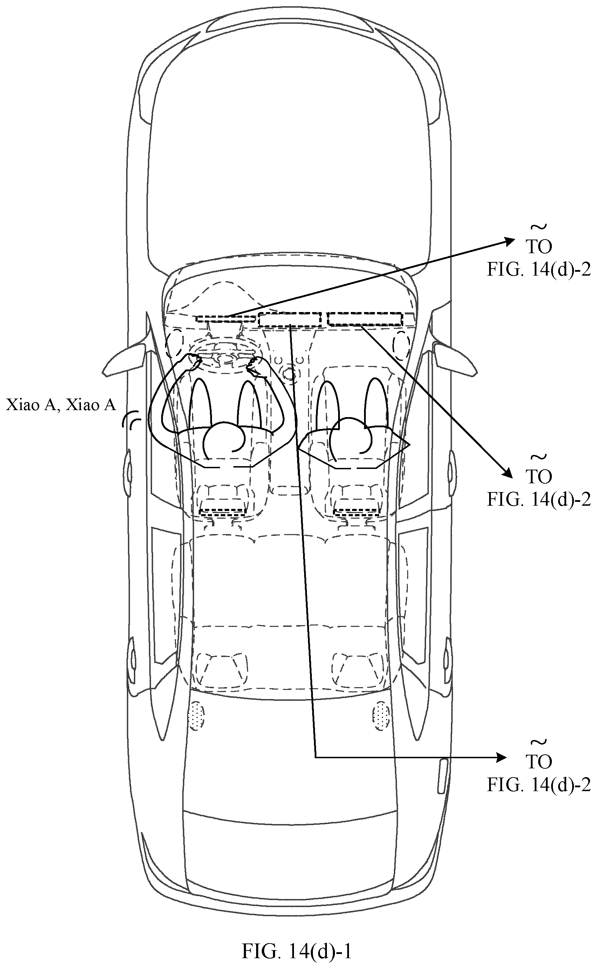

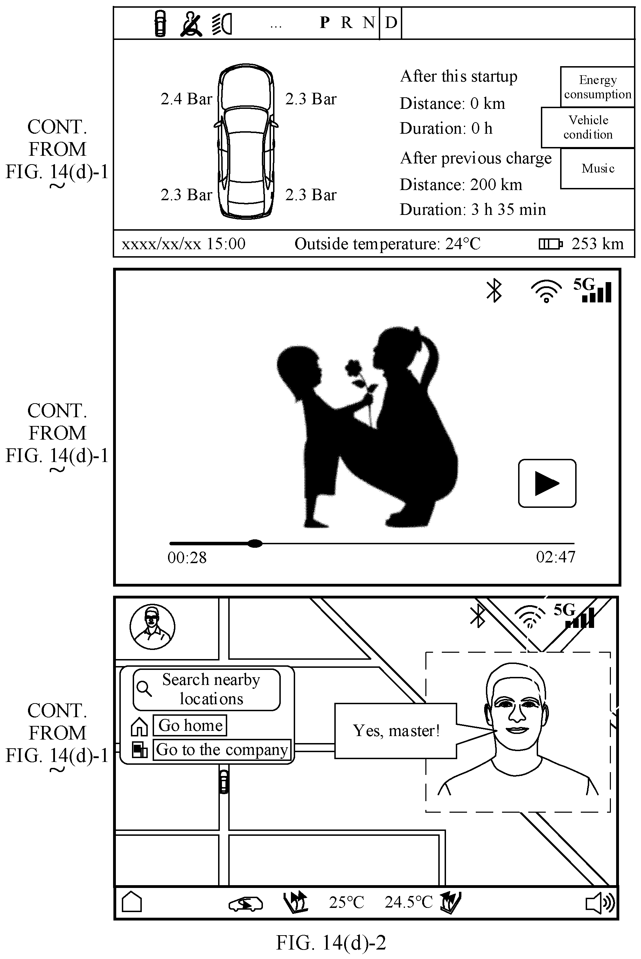

For example, FIG. 14(a) to FIG. 14(d)-2 show another resource allocation scenario and a group of GUIs according to an embodiment of this application.

For example, as shown in FIG. 14(a), a plurality of display apparatuses may include an instrument display screen, a central display screen, and a front passenger screen. The plurality of display apparatuses may be supported by a same SoC, and the SoC may allocate resources to the plurality of display apparatuses. For example, CPUs allocated by the SoC to the instrument display screen, the central display screen, and the front passenger screen may be 20%, 45%, and 35% respectively, and memories allocated by the SoC to the instrument display screen, the central display screen, and the front passenger screen may be 20%, 45%, and 35% respectively.

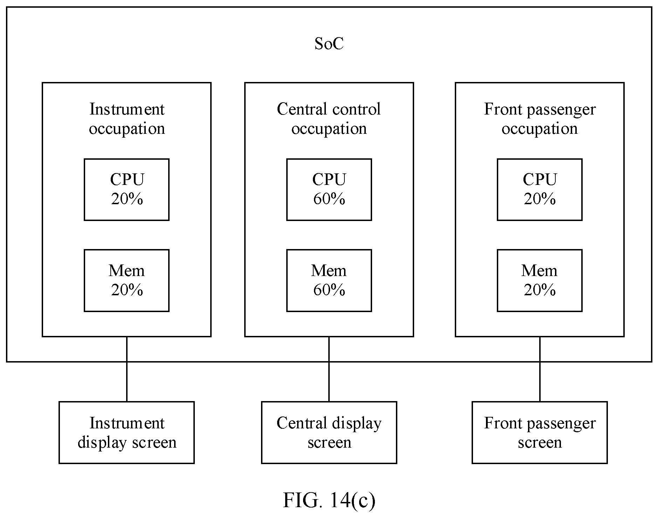

As shown in FIG. 14(b)-1 and FIG. 14(b)-2, a user A is located in a driver area, a user B may be located in a front passenger area of a cockpit of a vehicle, the front passenger screen may play a video, and the central display screen may display a dynamic or static wallpaper. When detecting a voice instruction of a user, the vehicle may display a GUI shown in FIG. 14(d)-1 and FIG. 14(d)-2. Correspondingly, resources allocated by the SoC to the plurality of display apparatuses may be shown in FIG. 14(c).

In some possible implementations, as shown in FIG. 8(b)-1 and FIG. 8(b)-2, the driver area of the vehicle includes the user A, and the front passenger area of the vehicle includes the user B. When the vehicle is in a traveling state, the instrument display screen, the central display screen, and the front passenger screen may display the GUI shown in FIG. 8(b)-1 and FIG. 8(b)-2. In this case, resource proportions allocated by the SoC that supports the plurality of display apparatuses to the plurality of display apparatuses may be shown in FIG. 8(a). When it is detected that the user taps an icon of a video application, the front passenger screen may play a video. Correspondingly, the SoC may adjust the resource proportions of the plurality of display apparatuses. For example, resources allocated by the SoC to the plurality of display apparatuses may be shown in FIG. 14(a). By increasing resources allocated to the front passenger screen, it can be ensured that the front passenger screen plays the video smoothly. In addition, because a proportion of resources allocated by the SoC to the central display screen decreases, the central display screen may display a dynamic or static wallpaper, or display a sleep interface. When the vehicle is in the traveling state, to ensure safe and stable running of the instrument display screen, a proportion of resources allocated by the SoC to the instrument display screen may be greater than or equal to a preset threshold.

As shown in FIG. 14(c), when detecting a voice instruction of the user, the SoC may adjust resources allocated by the SoC to the plurality of display apparatuses. For example, CPUs allocated by the SoC to the instrument display screen, the central display screen, and the front passenger screen may be 20%, 60%, and 20% respectively, and memories allocated by the SoC to the instrument display screen, the central display screen, and the front passenger screen may be 20%, 60%, and 20% respectively.

As shown in FIG. 14(d)-1 and FIG. 14(d)-2, when detecting a voice instruction of the user, the central display screen may display a man-machine interaction model, and respond to a subsequent voice instruction of the user. In this case, the front passenger screen may pause a video played on the front passenger screen.

In some possible implementations, when the front passenger screen is displaying the game interface, if a voice instruction of the user is detected, the central display screen may display a man-machine interaction model, and the front passenger screen may pause a game displayed on the front passenger screen, or may reduce image quality of a game running on the front passenger screen.

In some possible implementations, when detecting a voice instruction of the user, the central display screen may display a man-machine interaction model, and respond to a subsequent voice instruction of the user, and the front passenger screen may reduce image quality of a video played on the front passenger screen. For example, the front passenger screen may reduce the image quality of the video played on the front passenger screen from an ultra-definition to a high definition or a standard definition.

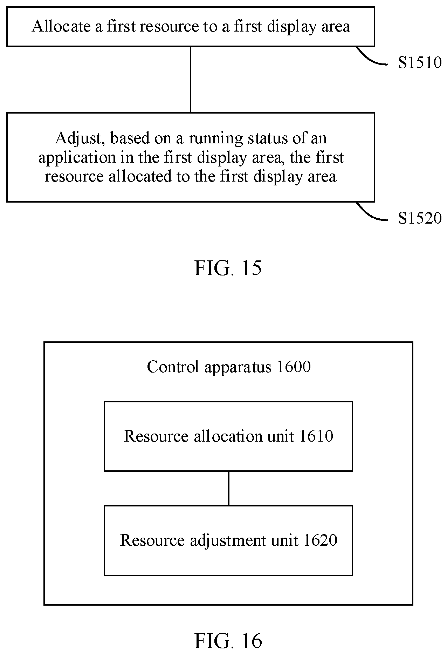

For example, FIG. 15 is a schematic flowchart of a resource allocation method according to an embodiment of this application. The method 1500 may be performed by a means of delivery (for example, a vehicle), or the method may be performed by the foregoing computing platform, or the method may be performed by a SoC in the computing platform, or the method may be performed by a processor in the computing platform. The method is applied to a cockpit of the means of delivery, a carrier area may include a plurality of display areas, and the method 1500 may include the following steps:
S1510: Allocate a first resource to a first display area, where the plurality of display areas include the first display area.

For example, the display area may be a display in a specific area in the cockpit. For example, the display area may be a central display screen, a front passenger entertainment screen, a display in a second-row left area, a display in a second-row right area, or the like. Alternatively, the display area may be a specific area of a display. For example, when the central display screen and the front passenger screen are combined into one long screen and correspond to different display areas (for example, a central control display area and a front passenger display area) of the long screen, the display area may alternatively be a display area on the long screen. The means of delivery may include the plurality of display areas, and the first display area may be any one of the plurality of display areas.

S1520: Adjust, based on a running status of an application in the first display area, the first resource allocated to the first display area.

For example, the application in the first display area may be an application displayed in the first display area, or may be an application running in a background of the first display area.

In some possible implementations, the plurality of display areas may further include a second display area, and the method may further include: allocating a resource to the second display area; and the adjusting the first resource allocated to the first display area may include: allocating a part of resources in a second resource to the first display area when resources required for running the application in the first display area are greater than or equal to available resources in the first resource.

For example, the second display area may be any display area that is different from the first display area in the plurality of display areas. The vehicle shown in FIG. 2 is used as an example. The plurality of display areas may include a central display screen, a front passenger screen, a display 203, a display 204, and an instrument display screen. For example, the first display area is the central display screen, and the second display area may be any display other than the central display screen. For another example, the long screen includes the central control display area and the front passenger display area, and the first display area is the central control display area of the long screen. The second display area may be the front passenger display area of the long screen, or may be another display like the instrument display screen.

For example, the first resource may be divided into occupied resources in the first resource and idle resources in the first resource. The occupied resources may be resources already occupied by an application running in the display area. For example, the first resource is 40%, and the application running in the first display area already occupies 32% of the resource. The idle resources in the first resource may be a difference 8% between the first resource and the occupied resources.

For example, available resources in the first resource may be the idle resources in the first resource, or may be a part of resources in the idle resources, for example, may be a part of the idle resources determined based on a preset threshold or a preset proportion. For example, the first display area is the central display screen, and the second display area is the front passenger screen. At a moment 1, resources allocated by the SoC to the central display screen are 40%, 22% of the resources are used by the central display screen, in other words, occupied resources are 22%, and idle resources are 18% (18% = 40% - 22%). In this case, it is detected that a user uses a video application on the central display screen, and when resources required for running the video application are greater than or equal to the idle resources (for example, 20% of the resources are required for running the video application), a part of resources in the second resource allocated to the front passenger screen may be allocated to the central display screen, to meet a resource requirement of the video application. When resources required for running the video application are less than or equal to the idle resources (for example, 10% of the resources are required for running the video application), the resources 40% allocated to the central display screen can be maintained. For another example, when resource utilization of the first resource in the first display area is excessively high, a case like frame freezing may occur when an application in the first display area is running. To avoid this case, the available resources in the first resource may be a part of the idle resources, for example, the available resources may be resources of an available threshold or resources of an available proportion in the idle resources. Therefore, resources of a preset threshold in the first resource (for example, resources whose proportion is 3%, 4%, or the like) or resources of a preset proportion in the first resource (for example, 5%, 10%, or the like of the first resource) may be retained, or resources of a preset threshold (for example, resources whose proportion is 3%, 4%, or the like) or resources of a preset proportion (for example, 0.05 or 0.1) in the idle resources may be retained, to avoid a problem that resource utilization of the first resource is excessively high. The following still uses an example in which the first display area is the central display screen, resource allocation at the moment 1 is used, and it is detected that the user uses the video application. In this case, resources allocated to the central display screen are 40%, occupied resources are 22%, and idle resources may be 18%. It is assumed that resources of an available threshold are 14.4%, and retained resources of a preset threshold are 3.6%. In this case, the available resources are 15%. Alternatively, it is assumed that an available proportion is 0.8. In this case, the available resources are 14.4%, and the retained resources are 3.6% (14.4% = 18% - 0.8*18%). When the resources required for running the video application are greater than or equal to the foregoing available resources, a part of resources in the second resource allocated to the front passenger screen may be allocated to the central display screen, to meet a resource requirement of the application. When the resources required for running the application are less than or equal to the available resources, resources currently allocated to the central display screen may be maintained, so that frequency of resource scheduling can be reduced, and resource scheduling overheads can be reduced. For another example, a preset threshold or a preset proportion for retention, or the foregoing available threshold or available proportion may be determined based on a size of the idle resources. For example, when the idle resources in the first resource are 20% to 29%, the retained resources of the preset threshold may be 8%. When the idle resources in the first resource are 10% to 19%, the retained resources of the preset threshold may be 5%. When the idle resources in the first resource are 5% to 10%, the retained resources of the preset threshold may be 2%. Correspondingly, the preset proportion may be similar. Certainly, the preset threshold, the preset proportion, the available threshold, and the available proportion may be other values, or may be set in another manner. This is not limited in embodiments of this application.

In some possible implementations, the adjusting the first resource allocated to the first display area includes: allocating a part of resources in the second resource to the first display area when the first display area includes a first application and the first application is running.

For example, the first application may be a preset application, for example, a voice interaction application related to FIG. 9(b)-1 and FIG. 9(b)-2, or a phone application, a navigation application, and the like related to FIG. 8(b)-1 and FIG. 8(b)-2. Alternatively, the first application may be an application whose resource requirement during running is greater than or equal to a preset threshold, for example, an application whose required resource proportion during running is greater than or equal to 10%, where the preset threshold may alternatively be another value, for example, 15%. Alternatively, the first application may be one or more types of applications. For example, the first application may include a navigation application, so that smooth running of the navigation application can be ensured, to avoid that the user misses important navigation information due to navigation frame freezing. For another example, the first application may include a voice interaction application, so that a voice instruction of the user can be responded to in time. For another example, the first application may include a game application, a video application, and the like, so that entertainment experience of the user can be improved.

In embodiments of this application, smooth running of the first application can be ensured through resource scheduling, to improve user experience.

For example, the foregoing embodiments may be combined. For example, when the first display area includes the first application, the first application is running, and resources required for running the application in the first display area are greater than or equal to the available resources in the first resource, a part of resources in the second resource are allocated to the first display area, to ensure smooth running of the first application.

For example, when the first display area includes the first application, the first application is running, and resources required for running the application in the first display area are less than or equal to the available resources in the first resource, because the available resources in the first resource may meet running of the application in the first display area, the first resource allocated to the first display area may be maintained, to reduce frequency of resource allocation and reduce resource scheduling overheads.

In some possible embodiments, the allocating a part of resources in the second resource to the first display area may include: allocating the part of resources in the second resource to the first display area when available resources in the second resource are greater than or equal to a preset threshold and/or when the second display area includes a second application and the second application is not running.

For example, before the part of resources in the second resource are allocated to the first display area, it may be determined whether the available resources in the second resource are greater than or equal to the preset threshold. For example, it is assumed that the preset threshold is 5% of resources, the first display area is the central display screen, and the second display area is the front passenger screen. At a moment 3, resources allocated by the SoC to the central display screen are 40%, resources occupied by the central display screen in the first resource are 22%, available resources are 15%, and resources allocated to the front passenger screen are 40%. It is assumed that resources occupied by the front passenger screen in the second resource are 20%, and available resources are 17%. When it is detected that the user uses a game application on the central display screen, for example, resources required for running the game application are 20%. Because the available resources in the second resource are greater than the preset threshold, a part of resources in the second resource may be adjusted to the central display screen. For example, after the resource adjustment, the first resource and the second resource may be 45% and 35% respectively. In this way, smooth running of the application on the central display screen is ensured, resource utilization is improved, and smooth running of the front passenger screen is ensured. For another example, at the moment 3, in the first resource and the second resource (whose resource proportions are 40% and 40% respectively), the available resources in the first resource are 15%, and the resources required for running the game application are 20%. It is assumed that resources occupied by the front passenger screen in the second resource are 35%, and available resources are 2%. Because the available resources in the second resource are less than the preset threshold, it may be considered that allocating resources in the second resource to the central display screen may affect use of the front passenger screen. Therefore, resources currently allocated to the front passenger screen may be maintained. In this way, impact of resource scheduling on the front passenger screen can be reduced. In this case, resources allocated to another display (for example, a display 203 or 204) may be determined, to determine whether resource scheduling can be performed.

For example, before the part of resources in the second resource are allocated to the first display area, it may be determined whether the second display area runs the second application. Similar to the first application, the second application may be a preset application, or may be an application whose resource requirement during running is greater than or equal to a preset threshold, or may be one or more types of applications. For brevity, details are not described herein again.

For example, the foregoing embodiments may be combined. For example, when the second display area includes the second application, the second application is not running, and the available resources in the second resource are greater than or equal to the preset threshold, a part of resources in the second resource are allocated to the first display area, to ensure smooth running of the first application.

In some possible embodiments, when the second display area includes the second application and the second application is running, even if the available resources in the second resource are greater than or equal to the preset threshold, the second resource allocated to the second display area may be maintained, to ensure smooth running of the second application. The vehicle shown in FIG. 2 is used as an example, and the second application is a game application. When available resources in resources allocated to the central display screen cannot meet resources required for running an application on the central display screen, resources allocated by the SoC to another display may be allocated to the central display screen. When it is determined that the front passenger screen runs the game application, the display 203 and the display 204 do not run the game application, and corresponding available resources meet the preset threshold, a part of resources allocated by the SoC to the display 203 and/or the display 204 may be allocated to the central display screen. In addition, resources currently allocated to the display 202 may be maintained, to ensure smooth running of the application on the central display screen, improve resource utilization, and ensure smooth running of the front passenger screen, the display 203, and the display 204, thereby reducing impact of resource scheduling on another display area.

In some possible embodiments, the second display area may include an instrument display area, and the allocating a second resource to the second display area may include: allocating the second resource to a plurality of tasks in the instrument display area; and the allocating a part of resources in the second resource to the first display area includes: allocating resources of a part of tasks in the plurality of tasks to the instrument display area, and allocating resources of another part of tasks in the plurality of tasks to the first display area.

For example, the instrument display area may relate to a plurality of tasks, for example, tire pressure monitoring and reminder, braking system monitoring and fault indicator, vehicle lamp high/low beam status monitoring, remaining power monitoring, broadcasting, music, and navigation. The plurality of tasks may correspond to a plurality of applications. The second resource allocated to the instrument display area may be used to implement the plurality of tasks running in the instrument display area. When the second resource allocated to the instrument display area needs to be scheduled to the first display area, available resources in the second resource may be scheduled to the first display area. Alternatively, resources of a part of tasks in the plurality of tasks (for example, tire pressure monitoring and reminder, and brake system monitoring and fault indicator) may be reserved for the instrument display area, and resources of another part of tasks (for example, broadcasting, music, and navigation) may be allocated to the first display area. It should be understood that the foregoing descriptions of the plurality of tasks in the instrument display area are merely examples. For example, gear monitoring, seat belt wearing status monitoring, endurance mileage, and real-time temperature monitoring inside and outside the vehicle may be further included. Examples are not described one by one herein.

In embodiments of this application, when the second display area includes the instrument display area, resources of a part of tasks in the instrument display area are allocated to the first display area. This can avoid scheduling all resources in the instrument display area to the first display area during resource scheduling, can ensure smooth running of basic tasks in the instrument display area, and helps ensure safety of the vehicle and the user.

For example, it is determined, based on priorities of the plurality of tasks, that priorities of the part of tasks are higher than priorities of the another part of tasks. For example, the plurality of tasks related to the instrument display area may be classified into a plurality of priorities based on vehicle safety, real-time performance, reliability, and the like. For example, tasks such as tire pressure monitoring and reminder, brake system monitoring and fault indicator have higher impact on vehicle safety than tasks such as broadcasting and music. Therefore, resources of broadcasting and music may be allocated to the first display area. For another example, tasks such as tire pressure monitoring and reminder, braking system monitoring and fault indicator, and gear monitoring have higher reliability requirements than tasks such as real-time temperature monitoring inside and outside the vehicle, broadcasting, music, and navigation. Therefore, resources of tasks such as real-time temperature monitoring inside and outside the vehicle, broadcasting, music, and navigation may be allocated to the first display area.

In some possible embodiments, before the allocating a part of resources in the second resource to the first display area, the method may further include: determining that the means of delivery is in a parked state.

Because a task related to the instrument display area usually affects driving safety, in embodiments of this application, a scheduled resource is determined based on a priority of a task in the instrument display area, so that impact of resource scheduling on user safety can be reduced. When it is determined that the means of delivery is in the parked state, the resources allocated to the instrument display area are allocated to the first display area. This helps further ensure the safety of the means of delivery and the user.

In some possible implementations, the first resource and the second resource may be from a same virtual machine.

For example, the plurality of display areas are controlled by a plurality of virtual machines, the plurality of virtual machines include a first virtual machine and a second virtual machine, the first virtual machine controls at least two display areas, the at least two display areas include the first display area, and the allocating a part of resources in the second resource to the first display area includes: preferentially allocating a part of resources of another display area in the first virtual machine to the first display area.

For example, in the system architecture shown in FIG. 4, when the plurality of display areas are controlled by a plurality of virtual machines, an example in which an instrument display screen is controlled by a virtual machine 1, and the central display screen and the front passenger screen are controlled by a virtual machine 2 is used. When resources required by an application on the central display screen are greater than or equal to available resources in resources allocated to the central display screen, more resources may be allocated to the central display screen. For example, the resource allocation scenarios in FIG. 8(a) to FIG. 9(d) are used as examples. Before a voice interaction operation of the user is detected, resources allocated to the instrument display screen, the central display screen, and the front passenger screen may be shown in FIG. 8(a). The GUI shown in FIG. 8(b)-1 and FIG. 8(b)-2 may be displayed. When a voice interaction operation of the user on the central display screen is detected, it is assumed that resources required by an application of voice interaction on the central display screen are less than or equal to available resources in the virtual machine 2, resources of another display area in the virtual machine may be allocated to the central display screen, and resources currently allocated to the instrument display screen remains unchanged. For example, after resource scheduling is completed, resources allocated to the instrument display screen, the central display screen, and the front passenger screen may be shown in FIG. 9(a). Correspondingly, because resources allocated to the front passenger screen decrease, the front passenger screen may still display the GUI shown in FIG. 8(b)-1 and FIG. 8(b)-2, or may display a dynamic or static wallpaper, or displays a sleep interface shown in FIG. 9(b)-1 and FIG. 9(b)-2. For another example, a resource proportion of available resources in the resources allocated to the central display screen is 15%, a resource proportion of available resources in the resources allocated to the front passenger screen is 10%, and a resource proportion of available resources in the resources allocated to the instrument display screen is 8%. In other words, the virtual machine 2 may have 25% available resources, and the virtual machine 1 has 8% available resources. Because kernel scheduling may be involved when resources are scheduled between virtual machines, and it is assumed that a new task related to an application on the central display screen needs 28% of resources when running, all available resources corresponding to the front passenger screen may be scheduled to the central display screen, and the available resources corresponding to the instrument display screen are used to supplement a remaining gap. For example, after resource scheduling, resource proportions of available resources corresponding to the central display screen, the front passenger screen, and the instrument display screen are 0%, 0%, and 5% respectively. In other words, all available resources in the virtual machine 2 and a part of available resources in the virtual machine 1 may be allocated to the central display screen, to minimize resources scheduled between virtual machines, thereby reducing resource allocation overheads.

For example, when the plurality of display areas are controlled by a plurality of virtual machines, in the vehicle cockpit scenario shown in FIG. 2, it is assumed that the instrument display screen is controlled by a virtual machine 1, the central display screen and the front passenger screen are controlled by a virtual machine 2, and the display 203 and the display 204 are controlled by a virtual machine 3. For example, when an input of the user for the central display screen is detected, more resources may be allocated to the central display screen. For example, before resource scheduling, available resources in the virtual machine 1 are 8%, available resources in the virtual machine 2 are 12% (available resources corresponding to the central display screen are 5%, and available resources corresponding to the front passenger screen are 7%), and available resources in the virtual machine 3 are 8% (available resources corresponding to the display 203 are 5%, and available resources corresponding to the display 204 are 3%). When resources (for example, resources whose proportion is 9%) required for running an application on the central display screen are less than or equal to the available resources in the virtual machine 2, the available resources corresponding to the front passenger screen may be allocated to the central display screen (for example, after resource scheduling, available resources in the virtual machine 1, the virtual machine 2, and the virtual machine 3 are 8%, 3%, and 8% respectively). For another example, when resources (for example, resources whose proportion is 14%) required for running an application on the central display screen are greater than or equal to the available resources in the virtual machine 2, and the vehicle is in a traveling state, to ensure smooth running of the instrument display screen, the available resources in the virtual machine 3 may be preferentially allocated to the instrument display screen 2. For example, after resource scheduling, available resources in the virtual machine 1, the virtual machine 2, and the virtual machine 3 are 8%, 0%, and 6% respectively. Further, for example, when the display 203 runs the first application but the display 204 does not run the first application, in a process of allocating the available resources in the virtual machine 3, the available resources corresponding to the display 204 may be preferentially scheduled. After resource scheduling, the available resources corresponding to the display 203 are 5%, and the available resources corresponding to the display 204 are 1%. For another example, because the available resources corresponding to the display 204 are greater than or equal to a preset threshold (for example, 3%), the available resources corresponding to the display 204 may be preferentially scheduled. After resource scheduling, the available resources corresponding to the display 203 are 3%, and the available resources corresponding to the display 204 are 3%. For another example, when resources (for example, resources whose proportion is 14%) required for running an application on the central display screen are greater than or equal to the available resources in the virtual machine 2, the vehicle is in a parked state, both the display 203 and the display 204 run the first application, and the available resources corresponding to the instrument display screen are greater than or equal to a preset threshold (for example, 4%), to ensure smooth running of the displays 203 and 204, the available resources corresponding to the instrument display screen may be preferentially scheduled. For example, after resource scheduling, available resources in the virtual machine 1, the virtual machine 2, and the virtual machine 3 are 6%, 0%, and 8% respectively. In the foregoing manner, resource scheduling between virtual machines can be reduced, and impact of resource scheduling on other display areas such as the instrument display screen, the display 203, and the display 204 can be reduced. For another example, when resources (for example, resources whose proportion is 22%) required for running an application on the central display screen are greater than or equal to the available resources in the virtual machine 2, for example, when the vehicle is in a traveling state, the available resources in the virtual machine 3 may be preferentially allocated to the instrument display screen 2. After resource scheduling, available resources in the virtual machine 1, the virtual machine 2, and the virtual machine 3 are 6%, 0%, and 0% respectively. For another example, when the vehicle is in a parked state, resources of the virtual machine 1 and the virtual machine 3 may be scheduled according to a preset ratio (for example, 1: 1). After resource scheduling, available resources in the virtual machine 1, the virtual machine 2, and the virtual machine 3 are 3%, 0%, and 3% respectively, and the preset ratio may alternatively be another value (for example, 1:2, 1:3, or 2: 1). For another example, further, with reference to running statuses of the display 203 and the display 204 (for example, whether to run the first application or a corresponding preset threshold), available resources corresponding to the displays 203 and 204 are scheduled. Based on the foregoing technical solution, during resource scheduling, vehicle safety and a running status of another display may be considered while resource utilization is improved, to reduce impact of resource scheduling on vehicle safety and another display.

For example, available resources in a virtual machine may be idle resources in the virtual machine, or a part of the idle resources. For example, the available resources in the virtual machine may be resources of an available threshold or resources of an available proportion (for example, 0.8 or 0.85) in the idle resources in the virtual machine. To avoid a problem that resource utilization of the virtual machine is excessively high, the available threshold or the available proportion may be a fixed value, and a value of the available threshold or the available proportion may be determined based on the idle resources. For example, when the idle resources are 20% to 29%, the available proportion may be 0.9. When the idle resources are 10% to 19%, the available proportion may be 0.8. When the idle resources are 5% to 10%, the available proportion may be 0.6. The available threshold may be determined in a similar manner, so that a proper quantity of resources may be reserved for the virtual machine, to avoid frame freezing caused by excessively high resource utilization. Certainly, the available threshold and the available proportion may alternatively be other values, or may be set in another manner.

In some possible implementations, the plurality of display areas are controlled by a plurality of virtual machines, the plurality of virtual machines include a first virtual machine and a second virtual machine, the first display area may be controlled by the first virtual machine, and the second display area may be controlled by the second virtual machine. The allocating a part of resources in the second resource to the first display area when resources required for running the application in the first display area are greater than or equal to available resources in the first resource may include: when the resources required for running the application in the first display area are greater than or equal to available resources in the first virtual machine, allocating the part of resources in the second resource to the first display area, where the second resource is from the second virtual machine.

For example, when the plurality of display areas include only the instrument display screen and the central display screen, in the architecture shown in FIG. 4, the instrument display screen may be controlled by a virtual machine 1, the central display screen may be controlled by a virtual machine 2, resources allocated to the instrument display screen are from the virtual machine 1, and resources allocated to the central display screen are from the virtual machine 2. For example, during resource scheduling, a part of resources allocated to the instrument display screen may be allocated to the central display screen. In other words, a part of resources from the virtual machine 1 are allocated to the central display screen. Certainly, the resources allocated to the central display screen may alternatively be allocated to the instrument display screen.

For example, when the plurality of display areas further include another display area, for example, a front passenger display area, in the architecture shown in FIG. 4, the instrument display screen may be controlled by a virtual machine 1, and the central display screen and the front passenger screen may be controlled by a virtual machine 2. It is assumed that at a moment 4, resources allocated to the instrument display screen, the central display screen, and the front passenger panel are shown in FIG. 8(a). The GUI shown in FIG. 8(a) may be displayed. In this case, available resources in the resources allocated to the central display screen are 15%, and available resources in the resources allocated to the front passenger screen are 2%. In other words, available resources in the virtual machine 2 are 17%. When it is detected that the user uses a game application on the front passenger screen, and it is assumed that resources required for running the game application are 20%, and are greater than the available resources in the virtual machine 2, a part of resources of the instrument display screen may be scheduled to the front passenger screen. For example, after resource scheduling is completed, resources allocated to the instrument display screen, the central display screen, and the front passenger screen are shown in FIG. 12(a). In other words, a part of the resources scheduled for the front passenger screen may be from the virtual machine 1, and the other part may be from the virtual machine 2. For another example, before scheduling resources for the front passenger screen, it may be determined whether a scheduling scenario meets a resource allocation condition, for example, determining whether available resources of the central display screen are greater than or equal to a preset threshold (for example, resources whose proportion is 3%), determining whether the central display screen runs the second application, determining whether available resources of the instrument display screen are greater than or equal to a preset threshold, and determining resources occupied by a task whose priority is less than or equal to a preset threshold on the instrument display screen. Certainly, in some cases, for example, when available resources in the first virtual machine are less than or equal to a preset threshold (for example, resources whose proportion is 3% or 5%), and resources required for running an application in the first display area are less than available resources in the second virtual machine, all resources scheduled for the first display area may alternatively be from the second virtual machine.

In embodiments of this application, resources in the second virtual machine are scheduled to the first virtual machine, so that resource utilization can be improved. Further, when the available resources in the first virtual machine are less than or equal to resources required for running an application in the first display area, resource scheduling between the second virtual machine and the first virtual machine is performed. Frequency of resource scheduling can be reduced, and this helps reduce resource scheduling overheads.

In some possible implementations, the second resource is used to display a video playing interface at a first definition in the second display area, and the method may further include: when allocating the part of resources in the second resource to the first display area, displaying a video playing interface at a second definition in the second display area, where the second definition is lower than the first definition.

For example, a multimedia file playing interface may include a video playing interface, a game interface, and the like. FIG. 14(a) to FIG. 14(d)-2 are used as an example. Before a voice interaction operation of the user on the central display screen is detected, resources of the central display screen and the front passenger screen may be shown in FIG. 14(a). The front passenger screen may display the video playing interface shown in FIG. 14(b)-1 and FIG. 14(b)-2 (for example, a definition of the video is an ultra-high definition). When a voice interaction operation of the user on the central display screen is detected, to ensure smooth running of the voice interaction operation on the central display screen, resources of the front passenger screen may be scheduled to the central display screen. Resources of the central display screen and the front passenger screen may be shown in FIG. 14(c). Because resources allocated to the front passenger screen decrease, the front passenger screen may display a pause interface of the video playing interface shown in FIG. 14(d)-1 and FIG. 14(d)-2, or may display a video playing interface at a high definition, a standard definition, or smooth image quality. For another example, the central display screen displays a video call screen, and when resources allocated to the central display screen are scheduled to the front passenger screen based on a running status of an application on the front passenger screen, a definition of the video call screen on the central display screen can be reduced.

In embodiments of this application, a definition of a video playing interface displayed in the second display area is reduced, so that overheads required for playing a video in the second display area can be reduced. This helps ensure smooth playing of the video while improving resource utilization.

In some possible implementations, the second resource is used to display a multimedia file playing interface in the second display area; and the method may further include: when allocating the part of resources in the second resource to the first display area, displaying an interface of pausing playing of a multimedia file in the second display area.

In embodiments of this application, a multimedia playing interface in the second display area is paused. This helps reduce a resource requirement of the second display area, helps reduce resource preemption by the second display area when resources are limited, and helps implement appropriate resource allocation.

In some possible implementations, the second resource is used to display a plurality of interface elements in the second display area; and the method further includes: when allocating the part of resources in the second resource to the first display area, displaying a part of the plurality of interface elements in the second display area.

For example, the resource allocation scenarios in FIG. 8(a) to FIG. 9(d) are used as examples. Before a voice interaction operation of the user is detected, resources allocated to the central display screen and the front passenger screen may be shown in FIG. 8(a). The GUI shown in FIG. 8(b)-1 and FIG. 8(b)-2 may be displayed. When a voice interaction operation of the user on the central display screen is detected, resources allocated to the front passenger screen may be scheduled to the central display screen. Because resources allocated to the front passenger screen decrease, the front passenger screen may display the GUI shown in FIG. 9(d). Compared with the GUI displayed on the front passenger screen before scheduling, the front passenger screen may display a part of the plurality of application icons previously displayed, so that smooth running of the front passenger screen is implemented by restricting use of another part of the applications on the front passenger screen by the user. For another example, after resource scheduling, an application icon still displayed or hidden on the front passenger screen may be preset, or may be determined based on resources required for running the application, or may be determined based on a type of the application (for example, a game application or a video application).

In the foregoing embodiments, an example in which the interface element includes an application icon is used for description. Certainly, when the display interface includes one or a plurality of cards, the interface element may also include the card (for example, a card shown in FIG. 8(c)). For example, after resource scheduling, the second display area may display a part of the plurality of cards.

In embodiments of this application, when the part of resources in the second resource are allocated to the first display area, a part of the plurality of interface elements are displayed in the second display area, so that use of the second display area can be limited, to avoid a case in which resource usage of the second resource is excessively high, avoid frame freezing during use of the second display area, and avoid resource preemption by the second display area. This helps implement appropriate resource allocation.

For example, the first application may be a game application, a video application, or a social application. The browser application in FIG. 8(b)-1 and FIG. 8(b)-2 is used as an example. When a game function is used by using the browser application, the browser application may be considered as a game application. When a video is played by using the browser application, the browser application may be considered as a video application. When a video call or a video conference is performed by using the browser application, the browser application may be considered as a social application. In other words, the game application, the video application, and the social application may be classified based on a type of the application, or may be classified based on a function implemented by the application.

In embodiments of this application, when the game application, the video application, or the social application runs in the first display area, resources allocated to the first display area are adjusted, so that smooth running of the game application, the video application, or the social application can be ensured, resource utilization can be improved, and user experience can also be improved.

An embodiment of this application further provides an apparatus for implementing any one of the foregoing methods. For example, an apparatus is provided, including units (or means) configured to implement steps performed by a means of delivery (for example, a vehicle) or a display system in any one of the foregoing methods.

FIG. 16 is a schematic block diagram of a control apparatus according to an embodiment of this application. The control apparatus 1600 may be configured to control a plurality of display areas in a cockpit of a means of delivery. The control apparatus 1600 may include: a resource allocation unit 1610, configured to allocate a first resource to a first display area, where the plurality of display areas include the first display area; and a resource adjustment unit 1620, configured to adjust, based on a running status of an application in the first display area, the first resource allocated to the first display area.

For example, for descriptions of the display area, the first display area, and the like, refer to the method 1500.

In this embodiment of this application, the first resource allocated to the first display area is dynamically adjusted based on the running status of the application in the first display area. This helps improve resource utilization, implement smooth running of the application in the first display area, and improve user experience.

Optionally, the plurality of display areas may further include a second display area, and the resource allocation unit 1610 may be further configured to allocate a resource to the second display area. The resource adjustment unit 1620 may be configured to: when resources required for running the application in the first display area are greater than or equal to available resources in the first resource, allocate a part of resources in the second resource to the first display area.

In this embodiment of this application, resource scheduling is performed between the first resource and a second resource based on the resources required for running the application in the first display area and the available resources in the first resource. This can reduce frequency of resource scheduling, and helps reduce resource allocation overheads.

Optionally, the resource adjustment unit 1620 may be configured to: allocate a part of resources in the second resource to the first display area when the first display area includes a first application and the first application is running.

For example, for a description of the first application, refer to step S1520 and the like.

In this embodiment of this application, resource scheduling is performed when the first application is running. This helps improve resource utilization, and ensure smooth running of the first application.

Optionally, the resource adjustment unit 1620 may be configured to: allocate the part of resources in the second resource to the first display area when available resources in the second resource are greater than or equal to a preset threshold and/or when the second display area includes a second application and the second application is not running.

For example, for descriptions of the preset threshold, the second application, the available resource, and the like, refer to step S1520 and the like.

In this embodiment of this application, during resource scheduling, a running status of an application in the second display area and the available resources in the second resource are determined, so that impact of resource scheduling on the second display area can be reduced while resource utilization is improved.

Optionally, the second display area may include an instrument display area. The resource allocation unit 1610 may be configured to allocate the second resource to a plurality of tasks in the instrument display area; and the resource adjustment unit 1620 may be configured to: allocate resources of a part of tasks in the plurality of tasks to the instrument display area, and allocate resources of another part of tasks in the plurality of tasks to the first display area.

Optionally, the resource adjustment unit 1620 may be further configured to: determine, based on priorities of the plurality of tasks, that priorities of the part of tasks are higher than priorities of the another part of tasks.

Because a task in the instrument display area is usually closely related to safety of the means of delivery, in this embodiment of this application, when resources in the instrument display area need to be adjusted, resources allocated to a part of tasks in the instrument display area are reserved. This helps maintain a basic function of the instrument display area, and ensure safety of a user and the means of delivery. Further, a task maintained in the instrument display area is determined based on a priority of the task, so that impact of resource scheduling on safety of the means of delivery can be further reduced.

Optionally, before allocating the part of resources in the second resource to the first display area, the resource adjustment unit 1620 may be further configured to: determine that the means of delivery is in a parked state.

In this embodiment of this application, when the vehicle is in the parked state, the resources allocated to the instrument display area may be scheduled to another display area. Correspondingly, when the vehicle is in a traveling state, resources currently allocated to the instrument display area may be maintained. This helps reduce impact of resource scheduling on running of the instrument display area, helps improve resource utilization in the parked state, and helps ensure smooth running of the task in the instrument display area in the traveling state.

In some possible implementations, the first resource and the second resource may be from a same virtual machine.

For example, the plurality of display areas are controlled by a plurality of virtual machines, the plurality of virtual machines include a first virtual machine and a second virtual machine, the first virtual machine controls at least two display areas, the at least two display areas include the first display area, and the resource adjustment unit 1620 may be configured to preferentially allocate a part of resources allocated to another display area in the first virtual machine to the first display area.

In some possible implementations, the plurality of display areas are controlled by a plurality of virtual machines, the plurality of virtual machines include a first virtual machine and a second virtual machine, the first display area may be controlled by the first virtual machine, and the second display area may be controlled by the second virtual machine; and the resource adjustment unit 1620 may be configured to: when the resources required for running the application in the first display area are greater than or equal to available resources in the first virtual machine, allocate the part of resources in the second resource to the first display area, where the second resource is from the second virtual machine.

For example, for a description of resource scheduling among a plurality of virtual machines, refer to step S1520 and the like.

In this embodiment of this application, resources in the first virtual machine are scheduled to the first display area, so that resource scheduling among a plurality of virtual machines can be avoided, and resource allocation overheads can be reduced. Further, when the available resources in the first virtual machine are less than or equal to the resources required for running the application in the first display area, a part of resources in the second virtual machine are scheduled to the first display area. This can reduce frequency of resource scheduling among the plurality of virtual machines, and reduce resource scheduling overheads.

Optionally, the second resource is used to display a video playing interface at a first definition in the second display area. The resource adjustment unit 1620 may be further configured to: when allocating the part of resources in the second resource to the first display area, display a video playing interface at a second definition in the second display area, where the second definition is lower than the first definition.

In this embodiment of this application, a definition of the video playing interface displayed in the second display area is reduced, so that a resource requirement of the second display area can be reduced. This helps implement appropriate resource allocation when resources are limited.

Optionally, the second resource is used to display a multimedia file playing interface in the second display area, and the resource adjustment unit 1620 may be further configured to: when allocating the part of resources in the second resource to the first display area, display an interface of pausing playing of a multimedia file in the second display area.

Optionally, the second resource is used to display a plurality of interface elements in the second display area; and the resource adjustment unit 1620 may be further configured to: when allocating the part of resources in the second resource to the first display area, display a part of the plurality of interface elements in the second display area.

In this embodiment of this application, the multimedia file playing interface is paused and the part of the interface elements are displayed, so that use of a part of functions by the user in the second display area may be displayed. This helps reduce a resource requirement of the second display area, and can avoid resource preemption by the second display area. When resources are limited, this helps implement appropriate resource allocation, improve resource utilization, and ensure smooth running of the first display area.

Optionally, the first application may be a game application, a video application, or a social application.

It should be understood that division into units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of each unit of the apparatus. The processor is, for example, a general-purpose processor like a CPU or a microprocessor. The memory is a memory inside the apparatus or a memory outside the apparatus. Alternatively, units of the apparatus may be implemented in a form of hardware circuits, and functions of some or all units may be implemented by designing the hardware circuits. The hardware circuits may be understood as one or more processors. For example, in an implementation, the hardware circuit is an ASIC, and functions of some or all of the foregoing units are implemented by designing a logical relationship between elements in the circuits. For another example, in another implementation, the hardware circuits may be implemented by using a PLD. An FPGA is used as an example. The FPGA may include a large quantity of logic gate circuits. A configuration file is used to configure a connection relationship between the logic gate circuits, to implement functions of some or all of the foregoing units. All units of the foregoing apparatus may be implemented in a form of software invoked by a processor; or all units may be implemented in a form of a hardware circuit; or some units may be implemented in a form of software invoked by a processor, and a remaining part may be implemented in a form of a hardware circuit.

In embodiments of this application, the processor is a circuit that has a signal processing capability. In an implementation, the processor may be a circuit that has an instruction reading and running capability, for example, a CPU, a microprocessor, a GPU, or a DSP. In another implementation, the processor may implement a specific function by using a logical relationship of hardware circuits. The logical relationship of the hardware circuits is fixed or reconfigurable. For example, the processor is an ASIC, or a hardware circuit implemented by a PLD, like an FPGA. In a reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be independently implemented. In an implementation, these units are integrated and implemented in a form of a SoC. The SoC may include at least one processor, configured to implement any one of the foregoing methods or implement functions of each unit in the apparatus. Types of the at least one processor may be different, for example, include a CPU and an FPGA, a CPU and an artificial intelligence processor, a CPU and a GPU, and the like.

During specific implementation, operations performed by the resource allocation unit 1610 and the resource adjustment unit 1620 may be performed by a same processor, or may be performed by different processors, for example, separately performed by a plurality of processors. For example, one or more processors may allocate the first resource to the first display area. For another example, one or more processors may be connected to the display apparatus 130 and the sensor in the sensing system 120 in FIG. 1, and obtain, from the display apparatus 130 and the sensor in the sensing system 120, an interaction operation between the user and the cockpit. For another example, one or more processors may determine the running status of the application in the first display area based on an interaction operation between the user and the cockpit. For another example, one or more processors may adjust, based on the running status of the application in the first display area, the first resource allocated to the first display area. For example, during specific implementation, the one or more processors may be processors disposed in an in-vehicle infotainment, or may be processors disposed in another vehicle-mounted terminal. For example, during specific implementation, the apparatus 1600 may be a chip disposed in an in-vehicle infotainment or another vehicle-mounted terminal. For example, during specific implementation, the apparatus 1600 may be the computing platform 150 shown in FIG. 1 disposed in the vehicle. In some possible implementations, the apparatus 1600 may be the apparatus 300 shown in FIG. 3. In some possible implementations, the apparatus 1600 may be the apparatus 400 shown in FIG. 4.

An embodiment of this application further provides an apparatus. The apparatus includes a processing unit and a storage unit. The storage unit is configured to store instructions, and the processing unit executes the instructions stored in the storage unit, so that the apparatus performs the method or step performed in the foregoing embodiments.

Optionally, during specific implementation, the processing unit may include at least one of the processors 151 to 15n shown in FIG. 1, and the determining unit may include at least one of the processors 151 to 15n shown in FIG. 1. The detection unit may be a sensor in the sensing system 120 shown in FIG. 1, or may be the processors 151 to 15n shown in FIG. 1.

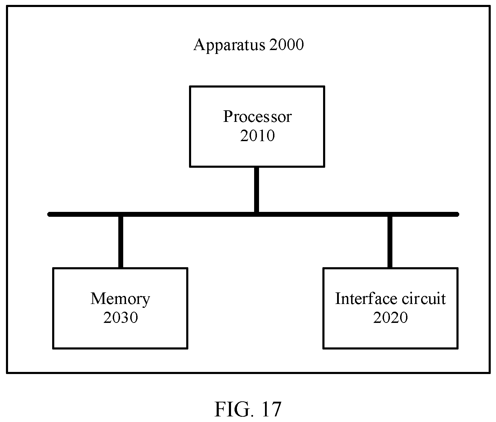

FIG. 17 is a schematic block diagram of another control apparatus according to an embodiment of this application. The display control apparatus 2000 shown in FIG. 17 may include a processor 2010, an interface circuit 2020, and a memory 2030. The processor 2010, the interface circuit 2020, and the memory 2030 are connected through an internal connection path. The memory 2030 is configured to store instructions. The processor 2010 is configured to execute the instructions stored in the memory 2030, so that the interface circuit 2020 receives/sends some parameters. Optionally, the memory 2030 may be coupled to the processor 2010 through an interface, or may be integrated with the processor 2010.

In some possible implementations, the apparatus 2000 may include the apparatus 300 shown in FIG. 3.

It should be noted that the interface circuit 2020 may include but is not limited to a transceiver apparatus like an input/output interface (input/output interface), to implement communication between the apparatus 2000 and another device or a communication network.

The processor 2010 may be a general-purpose CPU, a microprocessor, an ASIC, a GPU, or one or more integrated circuits, and is configured to execute a related program, to implement the resource allocation method in method embodiments of this application. The processor 2010 may alternatively be an integrated circuit chip and has a signal processing capability. During specific implementation, steps of the resource allocation method in this application may be implemented by using a hardware integrated logic circuit in the processor 2010, or by using instructions in a form of software. The processor 2010 may alternatively be a general-purpose processor, a DSP, an ASIC, an FPGA or another programmable logic device, a discrete gate or transistor logic device, or a discrete hardware component, and may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 2030. The processor 2010 reads information in the memory 2030, and performs, in combination with hardware of the processor 2010, the resource allocation method in the method embodiments of this application.

The memory 2030 may be a read-only memory (read-only memory, ROM), a static storage device, a dynamic storage device, or a random access memory (random access memory, RAM).

The interface circuit 2020 may be configured to implement communication between the apparatus 2000 and another device or a communication network. For example, information about an interaction between the user and the cockpit, and the like may be obtained based on information collected by a sensor of the interface circuit 2020.

An embodiment of this application further provides a control system. The control system may include a computing platform and a display apparatus. The computing platform may include the apparatus 1600 or the apparatus 2000.

For example, one or more display apparatuses may be divided into a plurality of display areas. The plurality of display areas include the foregoing first display area. The computing platform may be configured to allocate a first resource to the first display area, and the first resource allocated to the first display area may be adjusted based on a running status of an application in the first display area. For example, the control system may be shown in FIG. 3. The apparatus 300 may be an example of the foregoing apparatus 1600, the apparatus 2000, or the foregoing computing platform. For example, when the display apparatus 351 is a long screen, the control system may include only the display apparatus 351 (that is, m=1), or may include more display apparatuses. For another example, when the control system is not related to a long screen, a plurality of display apparatuses such as the display apparatuses 351 to 35m may be included. For another example, the control system may be disposed in a vehicle, and the foregoing apparatus 1600, the apparatus 2000, or the computing platform may be connected to the display apparatus through an internal circuit of the vehicle.

An embodiment of this application further provides a means of delivery. The means of delivery may include the foregoing apparatus 1600, the foregoing apparatus 2000, or the foregoing control system.

For example, the means of delivery may be the vehicle in the foregoing embodiments. For example, the vehicle may include the foregoing apparatus 1600, the foregoing apparatus 2000, or the foregoing control system. A cockpit of the vehicle may be shown in FIG. 2, and may include a display 201 to a display 205. The apparatus 1600, the apparatus 2000, or a computing platform in the control system may allocate resources to the displays 201 to 205. Resources allocated to the display may be adjusted based on a running status of an application on the display. For example, when the apparatus 1600, the apparatus 2000, or the computing platform may allocate resources to an instrument display screen, a central display screen, and a front passenger screen, FIG. 8(a) to FIG. 14(d)-2 may be examples of scenarios in which resources are allocated to the instrument display screen, the central display screen, and the front passenger screen. Certainly, the vehicle may alternatively include more or fewer display areas. The apparatus 1600, the apparatus 2000, or the computing platform may alternatively allocate resources to more or fewer display areas.

An embodiment of this application further provides a computer program product. The computer program product includes computer program code, and when the computer program code is run on a computer, the computer is enabled to perform the method 1500 and any possible implementation thereof.

An embodiment of this application further provides a computer-readable storage medium. The computer-readable storage medium stores program code or instructions. When the computer program code or the instructions are executed by a processor of a computer, the processor is enabled to perform the method 1500 and any possible implementation thereof.

For example, the computer-readable medium may include any medium that can store program code, like a USB flash drive, a removable hard disk, a read-only memory, a random access memory, a magnetic disk, or an optical disc. This is not limited in embodiments of this application. The computer-readable medium may store instructions of the resource allocation unit 1610 and/or the resource adjustment unit 1620. When the program code is run on the computer, the computer may be configured to perform an operation performed by the resource allocation unit 1610 and/or the resource adjustment unit 1620. For example, the computer that executes the foregoing computer program code may be connected to display apparatuses corresponding to a plurality of display areas.

An embodiment of this application further provides a chip, including at least one processor and a memory. The at least one processor is coupled to the memory, and is configured to read and execute instructions in the memory, to perform the method 1500 and any possible implementation thereof.

For example, the chip may be a chip disposed in an in-vehicle infotainment or another vehicle-mounted terminal.

It should be understood that, for convenient and brief description, for specific working processes and beneficial effects of the foregoing system, apparatus, and unit, refer to a corresponding process in the foregoing method embodiments. Details are not described herein again.

During implementation, steps in the foregoing methods can be implemented by using a hardware integrated logic circuit in the processor, or by using instructions in a form of software. The methods disclosed with reference to embodiments of this application may be directly performed by a hardware processor, or may be performed by using a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor. To avoid repetition, details are not described herein again.

Terms used in embodiments of this application are used only for the purpose of describing specific embodiments, but are not intended to limit this application. Terms "one", "a", "the", "the foregoing", "this", and "the one" of singular forms used in this specification and the appended claims of this application are also intended to include plural forms such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized in another manner. The terms "include", "have", and their variants all mean "include but are not limited to", unless otherwise specifically emphasized in another manner.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource allocation method, applied to a cockpit of a means of delivery, wherein the means of delivery comprises a plurality of display areas, and the method comprises:
allocating a first resource to a first display area, wherein the plurality of display areas comprise the first display area; and
adjusting, based on a running status of an application in the first display area, the first resource allocated to the first display area.

2. The method according to claim 1, wherein the plurality of display areas further comprise a second display area, and the method further comprises:
allocating a second resource to the second display area; and
the adjusting the first resource allocated to the first display area comprises:
allocating a part of resources in the second resource to the first display area when resources required for running the application in the first display area are greater than or equal to available resources in the first resource.

3. The method according to claim 1 or 2, wherein the adjusting the first resource allocated to the first display area comprises:
allocating a part of resources in the second resource to the first display area when the first display area comprises a first application and the first application is running.

4. The method according to claim 2 or 3, wherein the allocating a part of resources in the second resource to the first display area comprises:
allocating the part of resources in the second resource to the first display area when available resources in the second resource are greater than or equal to a preset threshold and/or when the second display area comprises a second application and the second application is not running.

5. The method according to any one of claims 2 to 4, wherein the second display area comprises an instrument display area, and the allocating a second resource to the second display area comprises:
allocating the second resource to a plurality of tasks in the instrument display area; and
the allocating a part of resources in the second resource to the first display area comprises:
allocating resources of a part of tasks in the plurality of tasks to the instrument display area, and allocating resources of another part of tasks in the plurality of tasks to the first display area.

6. The method according to claim 5, wherein the method further comprises:
determining, based on priorities of the plurality of tasks, that priorities of the part of tasks are higher than priorities of the another part of tasks.

7. The method according to claim 5 or 6, wherein before the allocating a part of resources in the second resource to the first display area, the method further comprises:
determining that the means of delivery is in a parked state.

8. The method according to any one of claims 2 to 7, wherein the first resource and the second resource are from a same virtual machine.

9. The method according to any one of claims 2 to 7, wherein the plurality of display areas are controlled by a plurality of virtual machines, the plurality of virtual machines comprise a first virtual machine and a second virtual machine, the first display area is controlled by the first virtual machine, and the second display area is controlled by the second virtual machine; and the allocating a part of resources in the second resource to the first display area when resources required for running the application in the first display area are greater than or equal to available resources in the first resource comprises:
when the resources required for running the application in the first display area are greater than or equal to available resources in the first virtual machine, allocating the part of resources in the second resource to the first display area, wherein the second resource is from the second virtual machine.

10. The method according to any one of claims 2 to 9, wherein the second resource is used to display a video playing interface at a first definition in the second display area; and
the method further comprises:
when allocating the part of resources in the second resource to the first display area, displaying a video playing interface at a second definition in the second display area, wherein the second definition is lower than the first definition.

11. The method according to any one of claims 2 to 10, wherein the second resource is used to display a multimedia file playing interface in the second display area; and
the method further comprises:
when allocating the part of resources in the second resource to the first display area, displaying an interface of pausing playing of a multimedia file in the second display area.

12. The method according to any one of claims 2 to 11, wherein the second resource is used to display a plurality of interface elements in the second display area; and
the method further comprises:
when allocating the part of resources in the second resource to the first display area, displaying a part of the plurality of interface elements in the second display area.

13. The method according to any one of claims 3 to 12, wherein the first application comprises a game application, a social application, or a video application.

14. A control apparatus, wherein the control apparatus is configured to control a plurality of display areas in a cockpit of a means of delivery, and the control apparatus comprises:
a resource allocation unit, configured to allocate a first resource to a first display area, wherein the plurality of display areas comprise the first display area; and
a resource adjustment unit, configured to adjust, based on a running status of an application in the first display area, the first resource allocated to the first display area.

15. The control apparatus according to claim 14, wherein the plurality of display areas further comprise a second display area, and the resource allocation unit is further configured to:
allocate a second resource to the second display area; and
the resource adjustment unit is configured to:
allocate a part of resources in the second resource to the first display area when resources required for running the application in the first display area are greater than or equal to available resources in the first resource.

16. The control apparatus according to claim 14 or 15, wherein the resource adjustment unit is configured to:
allocate a part of resources in the second resource to the first display area when the first display area comprises a first application and the first application is running.

17. The control apparatus according to claim 15 or 16, wherein the resource adjustment unit is configured to:
allocate the part of resources in the second resource to the first display area when available resources in the second resource are greater than or equal to a preset threshold and/or when the second display area comprises a second application and the second application is not running.

18. The control apparatus according to any one of claims 15 to 17, wherein the second display area comprises an instrument display area, and the resource allocation unit is configured to:
allocate the second resource to a plurality of tasks in the instrument display area; and
the resource adjustment unit is configured to:
allocate resources of a part of tasks in the plurality of tasks to the instrument display area, and allocate resources of another part of tasks in the plurality of tasks to the first display area.

19. The control apparatus according to claim 18, wherein the resource adjustment unit is further configured to:
determine, based on priorities of the plurality of tasks, that priorities of the part of tasks are higher than priorities of the another part of tasks.

20. The control apparatus according to claim 18 or 19, wherein before allocating the part of resources in the second resource to the first display area, the resource adjustment unit is further configured to:
determine that the means of delivery is in a parked state.

21. The control apparatus according to any one of claims 15 to 20, wherein the first resource and the second resource are from a same virtual machine.

22. The control apparatus according to any one of claims 15 to 20, wherein the plurality of display areas are controlled by a plurality of virtual machines, the plurality of virtual machines comprise a first virtual machine and a second virtual machine, the first display apparatus is controlled by the first virtual machine, and the second display area is controlled by the second virtual machine; and the resource adjustment unit is configured to:
when the resources required for running the application in the first display area are greater than or equal to available resources in the first virtual machine, allocate the part of resources in the second resource to the first display area, wherein the second resource is from the second virtual machine.

23. The control apparatus according to any one of claims 15 to 22, wherein the second resource is used to display a video playing interface at a first definition in the second display area, and the resource adjustment unit is further configured to:
when allocating the part of resources in the second resource to the first display area, display a video playing interface at a second definition in the second display area, wherein the second definition is lower than the first definition.

24. The control apparatus according to any one of claims 15 to 23, wherein the second resource is used to display a multimedia file playing interface in the second display area, and the resource adjustment unit is further configured to:
when allocating the part of resources in the second resource to the first display area, display an interface of pausing playing of a multimedia file in the second display area.

25. The control apparatus according to any one of claims 15 to 24, wherein the second resource is used to display a plurality of interface elements in the second display area, and the resource adjustment unit is further configured to:
when allocating the part of resources in the second resource to the first display area, display a part of the plurality of interface elements in the second display area.

26. The control apparatus according to any one of claims 16 to 25, wherein the first application comprises a game application, a social application, or a video application.

27. A control apparatus, comprising:
a memory, configured to store a computer program; and
a processor, configured to execute the computer program stored in the memory, so that the apparatus performs the method according to any one of claims 1 to 13.

28. A control system, wherein the control system comprises a computing platform and a display apparatus, and the computing platform comprises the control apparatus according to any one of claims 14 to 27.

29. A means of delivery, comprising the control apparatus according to any one of claims 14 to 27, or comprising the control system according to claim 28.

30. The means of delivery according to claim 29, wherein the means of delivery is a vehicle.

31. A computer-readable storage medium, wherein the computer-readable storage medium stores instructions, and when the instructions are executed by a processor, the processor is enabled to implement the method according to any one of claims 1 to 13.

32. A chip, wherein the chip comprises a processor and a data interface, and the processor reads, through the data interface, instructions stored in a memory, to perform the method according to any one of claims 1 to 13.
